# EUROPEAN PATENT APPLICATION

(11) **EP 3 462 770 A1**
(43) Date of publication of application: **03.04.2019**
(21) Application number: 18197776.0
(22) Date of filing: 28.09.2018
(51) Int. Cl.: H04W 28/08, H04W 48/00, H04W 76/10

(54) **METHODS AND APPARATUS FOR MULTIPLE TNL ASSOCIATIONS BETWEEN RAN AND AMF FOR VIRTUALIZED DEPLOYMENTS**

(30) Priority: 29.09.2017 US 201762566047 P
(71) Applicant: Intel IP Corporation, Santa Clara, CA 95054 (US)
(72) Inventor: SIROTKIN, Alexander, M 49527 Petach Tikva (IL); STOJANOVSKI, Alexandre Saso, 75 75020 Paris (FR)
(74) Representative: HGF Limited

(57) **Abstract**

There is provided a method in an Access and Mobility Management Function for configuring Transport Network Layer address associations in a Radio Access Network, the method comprising sending a message comprising one or more lists of Transport Network Layer address associations, wherein the one or more lists comprises one or more Transport Network Layer address associations to be used for initial User Equipment messages.

## Description

### CROSS REFERENCE TO RELATED APPLICATION

The present application claims priority to U.S. Provisional Patent Application No. 62/566,047, filed 29 September 2017, entitled "MULTIPLE TRANSPORT NETWORK LAYER (TNL) ASSOCIATIONS BETWEEN RADIO ACCESS NETWORK (RAN) AND ACCESS AND MOBILITY MANAGEMENT FUNCTION (AMF) FOR VIRTUALIZED DEPLOYMENTS FOR STAGE-3 SUPPORT" the entire disclosure of which is hereby incorporated by reference.

### BACKGROUND

Various embodiments generally may relate to the field of wireless communications.

### BRIEF DESCRIPTION OF THE DRAWINGS

Fig. 1 shows a block diagram of a method of configuring Transport Network Layer associations, in accordance with some example embodiments.
Fig. 2 shows a message diagram illustrating messaging between an Access and Mobility Management Function and a Radio Access Network, in accordance with some example embodiments.
Fig. 3 shows an architecture of a system of a wireless network, in accordance with some example embodiments.
Fig. 4 shows an architecture of a system of a wireless network, in accordance with some example embodiments.
Fig. 5 shows example components of a device, in accordance with some example embodiments.
Fig. 6 shows example interfaces of baseband circuitry, in accordance with some example embodiments.
Fig. 7 shows an illustration of a control plane protocol stack, in accordance with some example embodiments.
Fig. 8 shows an illustration of a user plane protocol stack, in accordance with some example embodiments.
Fig. 9 shows components of a core network, in accordance with some example embodiments.
Fig. 10 shows a block diagram illustrating components of a system to support Network Function Virtualization, in accordance with some example embodiments.
Fig. 11 shows a block diagram illustrating components, in accordance with some example embodiments, able to read instructions from a machine-readable or computer-readable medium (e.g. a non-transitory machine-readable storage medium) and perform any one or more methods described herein.

### DETAILED DESCRIPTION

The following detailed description refers to the accompanying drawings. The same reference numbers may be used in different drawings to identify the same or similar elements. In the following description, for purposes of explanation and not limitation, specific details are set forth such as particular structures, architectures, interfaces, techniques, etc. in order to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail. For the purposes of the present document, the phrase "A or B" means (A), (B), or (A and B).

According to the present disclosure, Access and Mobility Management Function (AMF) may be responsible for registration management (e.g., for registering User Equipment, etc.), connection management, reachability management, mobility management, and lawful interception of Access and Mobility Management Function-related events, and access authentication and authorization.

Throughout the following disclosure, the term Radio Access Network (RAN) shall be used to describe a generic Next Generation Radio Access Network which may cover various types of network nodes which provide connectivity to a User Equipment. Reference to a Radio Access Network shall also be understood to apply to a 5th Generation (5G) Access Node, which is introduced in the 3rd Generation Partnership Project (3GPP) to refer to non-3GPP access, which includes for example Wi-Fi Access Point. Reference to a Radio Access Network shall also be understood to encompass a gNodeB, which is a single network node providing 5G radio connectivity (i.e. New Radio (NR)) to User Equipment, and eNodeB, as well as variants thereon, the terms for which (acronyms and the like) would be readily apparent to the skilled person.

According to the present disclosure, some future implementations of New Radio (NR) systems may support usage of multiple Transport Network Layer (TNL) associations between Radio Access Networks (RAN) and Access and Mobility Management Function, to allow Access and Mobility Management Function deployment in virtualized environment(s). Such future implementation deployments may allow load balancing between different Access and Mobility Management Function "resources", each of which may have separate Transport Network Layer addresses. Access and Mobility Management Function "resources" may be processing resources for hosting the virtualized Access and Mobility Management Function and may include, for example, a server in a server farm, or a CPU in a multi-CPU system, although these examples are not exhaustive and other processing resources implementations are also possible.

Additionally, such future implementations may allow the Radio Access Network to decide which of the multiple Transport Network Layer association(s) is used for non-User Equipment (UE) associated signalling. However, since an Access and Mobility Management Function may be able to remove Transport Network Layer associations, this presents a problem - because an Access and Mobility Management Function may remove an association used for non-User Equipment associated signalling. Embodiments herein described in the present disclosure may address the issues described above as follows:

The 3^{rd} Generation Partnership Project (3GPP) Stage-3 defines switching and signalling capabilities needed to support services defined in 3GPP Stage-1. Stage-3 signalling for Radio Access Network-based load balancing may be defined, in which an Access and Mobility Management Function signals two lists of Transport Network Layer addresses: one list for an initial User Equipment message and one list of other Transport Network Layer messages. According to some examples, a gNodeB may use one of the Transport Network Layer associations designated for an initial User Equipment message (where, in some examples, the initial UE message may go via a load balancing function in the Access and Mobility Management Function virtualized environment, before reaching the Access and Mobility Management Function itself) and the Access and Mobility Management Function may reply on any other Transport Network Layer association, which is used from that point on. Additionally, the Radio Access Network may use a *RAN CONFIGURATION UPDATE* message to indicate which Transport Network Layer association is used for non-User Equipment associated signalling. The Access and Mobility Management Function may not be allowed to release the Transport Network Layer association used for non-User Equipment associated signalling (i.e. the Access and Mobility Management Function may not remove the Transport Network Layer association for the non-User Equipment.

Without such mechanisms as described herein, there may be no protocol support for Access and Mobility Management Function deployment in a virtualized environment. That is to say, examples of the present disclosure provide mechanisms for managing all relevant Transport Network Layer associations, in order to support deployment of Access and Mobility Functions in a virtualized environment.

According to the present disclosure, the "initial User Equipment message" may be the first of a series of one or more messages sent when the User Equipment goes into CONNECTED mode. If the User Equipment goes into IDLE mode and then returns to the CONNECTED mode, then another initial User Equipment message may be sent. Accordingly, the message is 'initial' in the sense that the Radio Access Network node or the gNodeB to which the User Equipment connects knows nothing about (this instance of) the User Equipment prior to the initial User Equipment message. Put a further way, the initial UE message may only be "initial" in the sense of initial, or one of the first, on a given connection, not in absolute terms.

Multiple Transport Network Layer associations between a Radio Access Network (or, for example, a gNodeB) and an Access and Mobility Management Function may be used to support load balancing between different Access and Mobility Management Function (or processing) hardware resources when the Access and Mobility Management Function is implemented in a virtualized environment. Currently, there are two load balancing mechanisms defined by current standards: Core Network (CN)-based load balancing and Radio Access Network (RAN)-based.

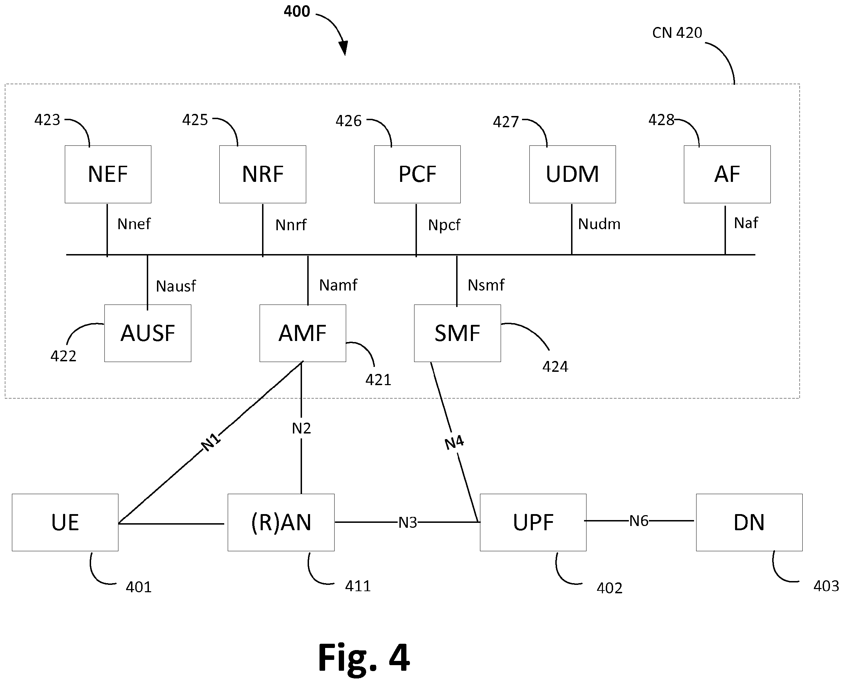

Core Network-based load balancing is defined in the document 3GPP TS 23.502, version 1.2.0, which is hereby incorporated by reference in its entirety. In Core Network-based load balancing, the Access and Mobility Management Function supplies the 5^{th} Generation (Radio) Access Network (5G (R)AN) node with information about: a) the Access and Mobility Management Function Name and the Global Unique Address and Mobility Management Function Identifier(s) (GUAMI(s)) configured on that Access and Mobility Function Name; b) the set of Transport Network Layer associations available for reception of the initial N2 message (e.g. *N2 INITIAL UE MESSAGE,* i.e., in this case, an initial message sent on the N2 interface - see Fig. 4 - which is a generic name for this interface) Note that the Access and Mobility Management Function chooses whether or not to use the same Transport Network Layer association(s) for the initial N2 message and subsequent messages for that User Equipment; c) the set of Transport Network Layer associations that are not permitted for the initial N2 message, but which the Access and Mobility Management Function can use for subsequent User Equipment related N2 signalling (note that the Access and Mobility Management Function may leave this set empty); d) weight factor of the Access and Mobility Management Function within the Access and Mobility Management Function set; and e) optionally, a weight factor of the Transport Network Layer association(s) used within or by the Access and Mobility Management Function.

Core Network-based load balancing can be implemented using Transport Network Layer associations designated for an initial User Equipment message, typically called *INITIAL UE MESSAGE.* In this mechanism, the first NG-Application Protocol message is sent on a designated Transport Network Layer association to an Access and Mobility Management Function (such designated association may be connected to a load balancing function), after which the Access and Mobility Management Function can do load balancing using triangular routing, i.e. by replying on another Transport Network Layer association, which will be used from that moment on. For example, if the Radio Access Network sends a message to the Access and Mobility Management Function on a first Transport Network Layer association, the Access and Mobility Management Function may decide to respond on a second Transport Network Layer association (determined by a load balancing function), after which all subsequent messages from the Radio Access Network will be sent on the second Transport Network Layer.

According to some aspects of the disclosure herein, NG-Application Protocol messages provide the signalling service between the NG Radio Access Network node and the Access and Mobility Management Function that is required to fulfil NG-Application Protocol functions as described in document 3GPP TS 38.410, version 0.4.0, which is hereby incorporated by reference in its entirety. NG-Application Protocol messages are divided into two groups: non-User Equipment-associated messages and User Equipment-associated messages. Non-User Equipment-associated messages are related to the whole NG interface instance between the NG Radio Access Network node and the Access and Mobility Management Function. User Equipment-associated messages are related to one User Equipment, and NG-Application Protocol functions that provide these services are associated with a User Equipment-associated signalling connection that is maintained for the User Equipment in question.

NG-Application Protocol consists of Elementary Procedures (EPs). An Elementary Procedure is a unit of interaction between the NG Radio Access Network node and the Access and Mobility Management Function. An Elementary Procedure consists of an initiating message and in some instances a response message. Elementary Procedures can be separated into two classes. Class 1 Elementary Procedures are Elementary Procedures with a response (i.e. either success and/or failure). Class 2 Elementary Procedures are Elementary Procedures without a response. In the present disclosure, examples are discussed in relation to a number of example Class 1 Elementary Procedures (e.g. *AMF CONFIGURATION UPDATE, RAN CONFIGURATION UPDATE, NG SETUP RESPONSE*), however it will become apparent to the skilled person in light of the disclosure herein that the examples and embodiments can also be implemented in other Class 1 Elementary Procedures and/or Class 2 Elementary Procedures. Elementary Procedures for NG-Application Protocol are described in document 3GPP TS 38.410, version 0.4.0, which is hereby incorporated by reference in its entirety.

Radio Access Network-based load balancing is defined in the document 3GPP TS 23.501, version 1.4.0, which is hereby incorporated by reference in its entirety. Radio Access Network-based load balancing may rely on *(optional) weight factor of the TNL association,* the use of which allows the Radio Access Network (i.e. gNodeB, 5G AN, NG RAN node, etc) to decide on the most appropriate Transport Network Layer association to use in any given implementation, based on the provided weightings. Access and Mobility Management Function may periodically update the weight factors as, for example, load or some other conditions change.

Whilst example embodiments described herein may adopt the Radio Access Network-based mechanism, some embodiments may also be applicable with the Core Network-based mechanisms.

According to some disclosed examples, a single pair of Stream Control Transmission Protocol (SCTP) streams within the Stream Control Transmission Protocol association selected by the NG-Radio Access Network node may be used for non-User Equipment associated signalling. Furthermore, the Radio Access Network may decide which Transport Network Layer association is used for that purpose. However, hitherto it has been unknown as to whether/how this information should be conveyed to Access and Mobility Management Function and whether the Access and Mobility Management Function is allowed to, and what happens if/when, the Access and Mobility Management Function releases that Stream Control Transmission Protocol association (i.e. stops using the Stream Control Transmission Protocol association). Accordingly, the present disclosure now defines these parameters, described in detail as follows.

In some cases, an Access and Mobility Management Function may be able to request the 5G Access Network node (Radio Access Network node) to add or remove Transport Network Layer associations to (or for) the Access and Mobility Management Function. Therefore, there may be a problem if an Access and Mobility Management Function removes the Transport Network Layer association which the Radio Access Network uses for non-User Equipment associated signalling. According to some examples disclosed herein, a possible way to resolve this issue is for a Radio Access Node (e.g. gNodeB) to indicate to the Access and Mobility Management Function which Transport Network Layer association is used for non-User Equipment associated signalling; so that the Access and Mobility Management Function does not remove that association. Additionally, if a Radio Access Node (e.g. gNodeB) only uses *"Transport Network Layer associations available for reception of the initial N2 message"* (e.g. the initial N2 message noted in the core-network-based load balancing described above) for non-User Equipment associated signalling, which may be associated with Access and Mobility Management Function load balancing function (which in its turn is unlikely to be removed), this can decrease the chances of Access and Mobility Management Function needing to remove the Transport Network Layer association used for non-User Equipment associated signalling.

In various example embodiments, there are two options (which may be used alone or in combination):
1) A Radio Access Network (e.g. a gNodeB) indicates to the Access and Mobility Management Function which Transport Network Layer association is used for non-User Equipment associated signalling; and the Access and Mobility Management Function does not remove that association.
2) A Radio Access Network (e.g. a gNodeB) selects a Transport Network Layer association to be used for non-User Equipment associated signalling from the list of Transport Network Layer associations available for reception of the initial N2 message (e.g. *initial N2 message*), as signalled by the Access and Mobility Management Function.

While the second option has some appeal, as it does not require any signalling, it may not be used for NG Setup Request, as the NG Setup Request message itself is a non-User Equipment associated message (i.e. signalling). Therefore, the NG Setup Request message must be sent over a preconfigured non-User Equipment Transport Network Layer address association. This can be resolved if it is assumed that the Transport Network Layer addresses of the Access and Mobility Management Function which is preconfigured in the Radio Access Node (e.g. gNodeB) is one of the Transport Network Layer addresses which can be used for non-User Equipment associated signalling. Therefore, embodiments may include the following: the preconfigured Transport Network Layer address of an Access and Mobility Management Function that can be used for non-User Equipment associated signalling; additionally, a Radio Access Node (e.g. a gNodeB) may indicate to an Access and Mobility Management Function which Transport Network Layer associations are used for non-User Equipment associated signalling using a Radio Access Node (gNodeB Configuration Update message.

In some examples of the disclosure herein, there may be multiple Transport Network Layer associations designated for non-User Equipment associated signalling.

Based on the foregoing, in some examples the 3GPP stage-3 signalling may be as follows, in accordance with various embodiments:
*1) NG SETUP RESPONSE* carries two lists of Transport Network Layer addresses to add: one list for an initial User Equipment message(s) and one list for other messages;
2) *AMF CONFIGURATION UPDATE* carries two lists: a list of Transport Network Layer addresses to add, and a list of Transport Network Layer addresses to remove; each list having two sets: one set for an initial User Equipment message(s) and one set for other messages;
*3) RAN CONFIGURATION UPDATE* can be used to indicate which Transport Network Layer association is used for non-User Equipment associated signalling.

Throughout the disclosure herein, the form "list" may include any other data structure suitable for containing and transferring data, for example on associations between different TNL addresses to use in given situations.

In the foregoing, "other messages" may refer to subsequent (i.e. non-initial) User Equipment related messages. That is to say, the list of other Transport Network Layer addresses is a set of Transport Network Layer associations that are not permitted for the initial User Equipment message, but which the Access and Mobility Management Function may use for subsequent User Equipment related signalling. In some embodiments of the disclosure, the list of Transport Network Layer address associations for other messages may be left empty.

In some examples, a *RAN CONFIGURATION UPDATE* message is used for signalling. This message is sent by the NG-RAN node to transfer updated application layer information for an NG-C interface instance. The *RAN CONFIGURATION UPDATE* message is sent from the NG-RAN node to the Access and Mobility Management Function.

Table 1 shows an example *RAN CONFIGURATION UPDATE* message in accordance with some embodiments of the disclosure herein. Note that not all of the fields are essential to performing the Transport Network Layer address association configurations, and some of the fields are simply included for context as other parameters in the message which perform other functions.

**Table 1: RAN Configuration Update Message**

| **IE/Group Name** | **Presence** | **Range** | **IE type and reference** | **Semantics description** | **Criticality** | **Assigned Criticality** |
|---|---|---|---|---|---|---|
| Message Type | M | | 9.3.1.1, TS 38.413 V0.3.0 | | YES | rej ect |
| Global RAN Node ID | M | | 9.3.1.5, TS 38.413 V0.3.0 | | YES | rej ect |
| RAN Node Name | O | | PrintableString (SIZE(1..150, ...)) | | YES | ignore |
| Supported TAs (Tracking Areas) | | *1..<max noofTACs*> | | Supported TAs in the NG-RAN node. | GLOBAL | rej ect |
| >TAC | M | | <ref> | Broadcast TAC | - | |
| >Broadcast PLMNs | | *1..<max noofBPL MNs>* | | Broadcast PLMNs | - | |
| >>PLMN Identity | M | | 9.3.3.5, TS 38.413 V0.3.0 | | - | |
| >>TAI Slice Support List | O | | Slice Support List 9.3.1.28, TS 38.413 V0.3.0 | Supported S-NSSAIs per TA. | YES | ignore |
| **AMF Transport Layer Address Item for non-UE- associated signalling** | | | | | **YES** | **ignore** |
| **> AMF Transport Layer Address** | **O** | | | **Transport Layer Address of the AMF.** | **YES** | **ignore** |

In some examples, a *NG SETUP RESPONSE* message is used for signalling. This message is sent by the Access and Mobility Management Function to transfer application layer information for an NG-C interface instance. The *NG SETUP RESPONSE* message is sent from the Access and Mobility Management Function to the Radio Access Network (e.g. gNodeB).

Table 2 shows an example *NG SETUP RESPONSE* message in accordance with some embodiments of the disclosure herein. Note that not all of the fields are essential to performing the Transport Network Layer address association configurations, and some of the fields are simply included for context as other parameters in the message which perform other functions.

**Table 2: NG Setup Response Message**

| **IE/Group Name** | **Presence** | **Range** | **IE type and reference** | **Semantics description** | **Criticality** | **Assigned Criticality** |
|---|---|---|---|---|---|---|
| Message Type | M | | <ref> | | YES | rej ect |
| AMF Name | O | | PrintableString (SIZE(1..150, ...)) | | YES | ignore |
| AMF pool and AMF code related information | M | | <ref> | | GLOBAL | rej ect |
| Relative AMF Capacity | M | | <ref> | | YES | ignore |
| AMF Slice Support | O | | | Configured slices in the AMF. | YES | ignore |
| **AMF Transport Layer Address List** | | **0..1** | | | **YES** | **ignore** |
| **> AMF Transport Layer Address Item for Initial Message IEs** | | **1..<max noofTN LAssocia tions>** | | | **YES** | **ignore** |
| **>> AMF Transport Layer Address** | **M** | | | **Transport Layer Address of the AMF.** | **YES** | **ignore** |
| **> AMF Transport Layer Address Item IEs** | | **1..<max noofTN LAssocia tions>** | | | **YES** | **ignore** |
| **>> AMF Transport Layer Address** | **O** | | | **Transport Layer Address of the AMF.** | **YES** | **ignore** |
| Criticality Diagnostics | O | | <ref> | | YES | ignore |

| **Range bound** | | | **Explanation** | | | |
|---|---|---|---|---|---|---|
| maxnoofTNLAssociations | | | Maximum no. of TNL Associations between the gNB and the AMF. | | | |

In some examples, the *AMF CONFIGURATION UPDATE* message is used for signalling. This message is sent by the Access and Mobility Management Function to transfer updated information for an NG-C interface instance. The *AMF CONFIGURATION UPDATE* message is sent from the Access and Mobility Management Function to the Radio Access Network (e.g. gNodeB.)

Table 3 shows an example *AMF CONFIGURATION UPDATE* message in accordance with some embodiments of the disclosure herein. Note that not all of the fields are essential to performing the Transport Network Layer address association configurations, and some of the fields are simply included for context as other parameters in the message which perform other functions.

**Table 3: AMF Configuration Update Message**

| **IE/Group Name** | **Presence** | **Range** | **IE type and reference** | **Semantics description** | **Criticality** | **Assigned Criticality** |
|---|---|---|---|---|---|---|
| Message Type | M | | <ref> | | YES | rej ect |
| AMF Name | O | | PrintableStrin g(SIZE(1..150 ,...)) | | YES | ignore |
| AMF Slice Support | O | | | Configured slices in the AMF. | YES | ignore |
| **AMF Transport Layer Address for Initial Message To Add List** | | **0..1** | | | **YES** | **ignore** |
| **> AMF Transport Layer Address To Add Item IEs** | | **1..<max noofTN LAssocia tions>** | | | **YES** | **ignore** |
| **>> AMF Transport Layer Address** | **M** | | | **Transport Layer Address of the AMF.** | **YES** | **ignore** |
| **AMF Transport Layer Address for Initial Message To Remove List** | | **0..1** | | | **YES** | **ignore** |
| **> AMF Transport Layer Address To Remove Item IEs** | | **1..<max noofTN LAssocia tions>** | | | **YES** | **ignore** |
| **>> AMF Transport Layer Address** | **M** | | | **Transport Layer Address of the AMF.** | **YES** | **ignore** |
| **AMF Transport Layer Address To Add List** | | **0..1** | | | **YES** | **ignore** |
| **> AMF Transport Layer Address To Add Item IEs** | | **1..<max noofTN LAssocia tions>** | | | **YES** | **ignore** |
| **>> AMF Transport Layer Address** | **M** | | | **Transport Layer Address of the AMF.** | **YES** | **ignore** |
| **AMF Transport Layer Address To Remove List** | | **0..1** | | | **YES** | **ignore** |
| **> AMF Transport Layer Address To Remove Item IEs** | | **1..<max noofTN LAssocia tions>** | | | **YES** | **ignore** |
| **>> AMF Transport Layer Address** | **M** | | | **Transport Layer Address of the AMF.** | **YES** | **ignore** |

| **Range bound** | | | **Explanation** | | | |
|---|---|---|---|---|---|---|
| maxnoofTNLAssociations | | | Maximum no. of TNL Associations between the gNB and the AMF. | | | |

Note, the following definitions apply in the foregoing tables:
IE/Group Name = Information Element or group name (i.e. name of item descriptor).

All Information Elements / Groups are marked as either Mandatory, Optional or Conditional. Information Elements marked as Mandatory (M) shall always be included in the message. Information Elements marked as Optional (O) may or may not be included in the message. Information Elements marked as Conditional (C) shall be included in a message only if the relevant condition is satisfied, otherwise the Information Element shall not be included.

The Range column may indicate the allowed number of copies of repetitive Information Elements or Information Element groups.

IE Type and Reference = Information element type and reference.

Semantics Description = Description of semantics used in IE.

Each Information Element or group of Information Elements may have a criticality information applied to it, either a criticality of YES, GLOBAL or EACH. Some Information Elements or groups of Information Elements may have no explicitly applied criticality information. A criticality of YES means that criticality information is applied to the respective Information Element. The criticality of YES is usable only for non-repeatable Information Elements. A criticality of GLOBAL means that the respective Information Element and all of its repetitions together have one common criticality information. The criticality of GLOBAL is usable only for repeatable Information Elements. A criticality of EACH means that each repetition of the respective Information Elements has its own criticality information, and thus it is not allowed to assign different criticality values to the repetitions. The EACH criticality is usable only for repeatable Information Elements

The Assigned Critically defines what the receiving node(s) shall do if the parameter (i.e. Information Element) is not understood (for example, when the node is an older generation gNodeB). Criticality "reject" means that the receiving node rejects the whole message, if it does not understand that particular parameter. Criticality "ignore" means that if the receiving node(s) does not understand that particular parameter then the non-understandable parameter is ignored but the remainder of the message (which is understood) is processed. Criticality "ignore and notify sender" means that if the receiving node(s) does not understand that particular parameter then the non-understandable parameter is ignored, the remainder of the message (which is understood) is processed and the sending node is notified that the parameter was ignored.

Where a cell in the foregoing tables is left blank, it means that the field is not applicable to the parameter in question.

Where <ref> is used, it is typically a reference to another part of a 3rd Generation Partnership Project standard further defining this Information Element or some aspect thereof, which may also include parts yet to be fully described and/or agreed in the relevant standard.

Whilst the foregoing has been explained with reference to specific tables and/or data sets/elements contained therein, for explanation of (and potential inclusion in) certain setup, control or other messages or other configuration data used in a wireless network according to embodiments, it will be appreciated that the teaching of the disclosure may equally be applied to different tables, or data sets/elements that convey the same, or substantially similar, information, for similar or the same purposes. As such, the disclosed tables, or portions thereof (i.e. the data sets/elements therein) are not to be read in strict isolation, and specifically may be combined in any reasonable way, including using combinations of the tables, or parts thereof, or the like, to reach embodiments that, whilst are not explicitly described herein, are clearly still contemplated by the disclosure in its broadest sense. This is to say, the disclosure and eventually claimed invention is not necessarily restricted to only the specific data or tables described, but any reasonable combination that achieves the same as, or similar to, a described effect (such as using different names for the same data, and the like). Put another way, any other data that achieves the same effect is also covered by the disclosure, even when not specifically disclosed. This is because it is not reasonable to have to describe each and every way the invention could be implemented, without leading to an overly complex, convoluted and excessively long specification.

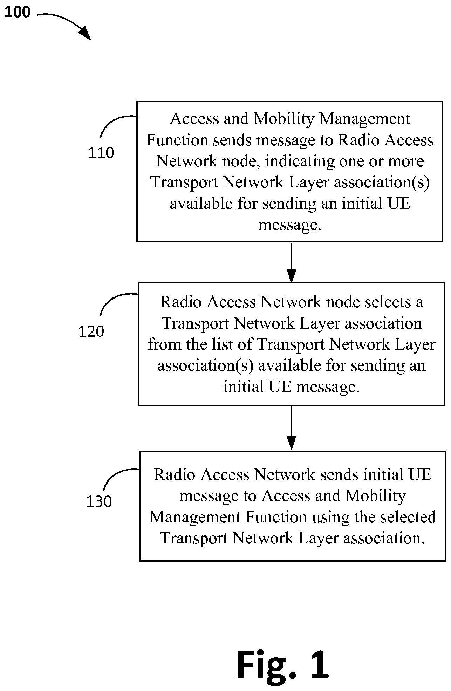

Fig. 1 shows a block diagram, 100, of a method in accordance with some examples disclosed herein. In block 110, the Access and Mobility Management Function sends a message, to be received at the Radio Access Network (e.g. 5G-AN, gNodeB, etc), indicating one or more Transport Network Layer associations that are available for the Radio Access Network to use for sending an initial User Equipment message. In block 120, the Radio Access Network selects one of the one or more Transport Network Layer associations to use for sending an initial User Equipment message from the received list of Transport Network Layer associations. At block 130, the Radio Access Network sends an initial User Equipment message to the Access and Mobility Management Function, using the selected Transport Network Layer association. Fig. 1 is one example only and should be not construed as the only means of carrying out the method disclosed herein. Specifically, in some further example embodiments, steps of the example method displayed in Fig. 1 may be carried out in a different order, or steps may be added or omitted.

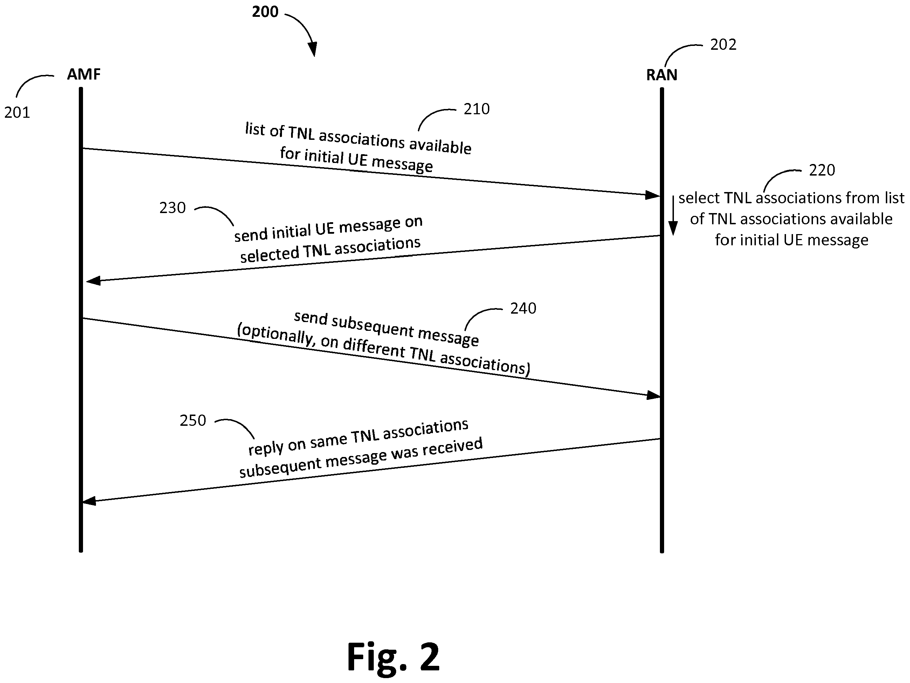

Fig. 2 shows a message diagram, 200, illustrating messaging between an Access and Mobility Management Function 201 and a Radio Access Network 202. Message 210 is sent from the Access and Mobility Management Function 201 to the Radio Access Network 202 to provide the Radio Access Network 202 with a list of one or more Transport Network Layer associations that are available for sending one or more initial User Equipment message(s) 230 to the Access and Mobility Management Function 201. At 220, the Radio Access Network 202 selects one of the Transport Network Layer associations to use for sending one or more initial User Equipment message(s) 230 from the received list of Transport Network Layer associations available for sending an initial User Equipment message 230. At least one initial User Equipment message(s) 230 is then sent from the Radio Access Network 202 to the Access and Mobility Management Function 201 on the selected Transport Network Layer association. A subsequent message 240 to be sent from the Access and Mobility Management Function 201 to the Radio Access Network 202 may be sent either on the same Transport Network Layer association used for the initial UE message(s) (i.e. the selected Transport Network Layer association for sending the initial User Equipment message 230) or on a different Transport Network Layer association, which may or may not be selected from the list of Transport Network Layer associations available for sending an initial User Equipment message(s). Thereafter, any subsequent message(s) 250 sent by the Radio Access Network 202 to the Access and Mobility Management Function 201 may be sent on the same Transport Network Layer as the message 240 from the Access and Mobility Management Function 201. Fig. 2 is one example only and should be not construed as the only means of carrying out the method disclosed herein. Specifically, in some further example embodiments messages in the example displayed in Fig. 2 may be sent or received in a different order, or messages may be added or omitted.

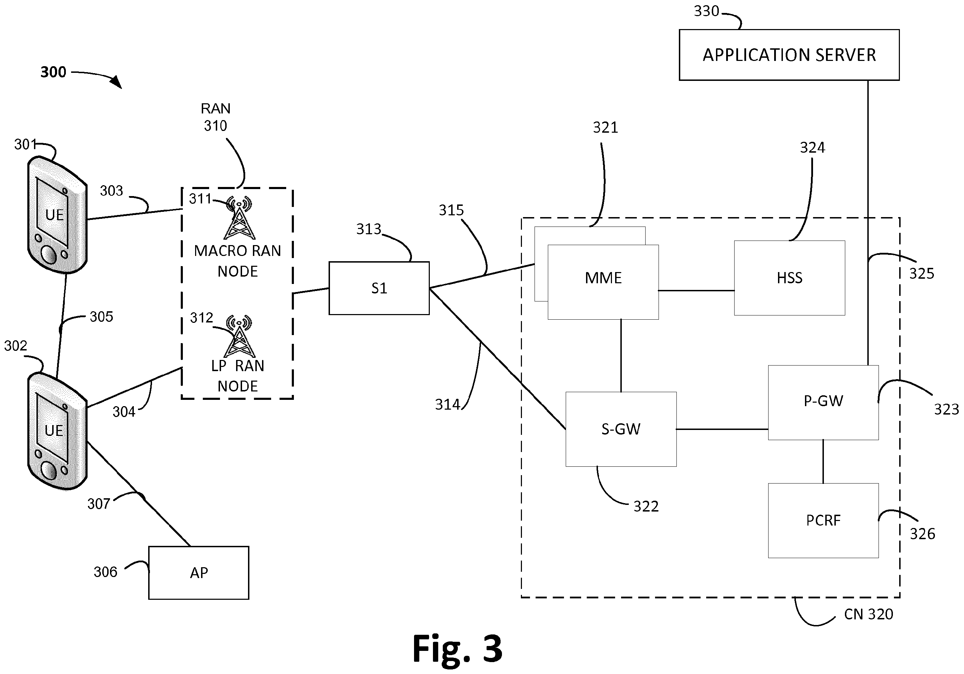

Fig. 3 illustrates an architecture of a system 300 of a network in accordance with some embodiments. The system 300 is shown to include a user equipment (UE) 301 and a UE 302. The UEs 301 and 302 are illustrated as smartphones (e.g., handheld touchscreen mobile computing devices connectable to one or more cellular networks), but may also comprise any mobile or non-mobile computing device, such as Personal Data Assistants (PDAs), pagers, laptop computers, desktop computers, wireless handsets, or any computing device including a wireless communications interface.

In some embodiments, any of the UEs 301 and 302 can comprise an Internet of Things (IoT) UE, which can comprise a network access layer designed for low-power IoT applications utilizing short-lived UE connections. An IoT UE can utilize technologies such as machine-to-machine (M2M) or machine-type communications (MTC) for exchanging data with an MTC server or device via a public land mobile network (PLMN), Proximity-Based Service (ProSe) or device-to-device (D2D) communication, sensor networks, or IoT networks. The M2M or MTC exchange of data may be a machine-initiated exchange of data. An IoT network describes interconnecting IoT UEs, which may include uniquely identifiable embedded computing devices (within the Internet infrastructure), with short-lived connections. The IoT UEs may execute background applications (e.g., keep-alive messages, status updates, etc.) to facilitate the connections of the IoT network.

The UEs 301 and 302 may be configured to connect, e.g., communicatively couple, with a radio access network (RAN) 310 - the RAN 310 may be, for example, an Evolved Universal Mobile Telecommunications System (UMTS) Terrestrial Radio Access Network (E-UTRAN), a NextGen RAN (NG RAN), or some other type of RAN. The UEs 301 and 302 utilize connections 303 and 304, respectively, each of which comprises a physical communications interface or layer (discussed in further detail below); in this example, the connections 303 and 304 are illustrated as an air interface to enable communicative coupling, and can be consistent with cellular communications protocols, such as a Global System for Mobile Communications (GSM) protocol, a code-division multiple access (CDMA) network protocol, a Push-to-Talk (PTT) protocol, a PTT over Cellular (POC) protocol, a Universal Mobile Telecommunications System (UMTS) protocol, a 3GPP Long Term Evolution (LTE) protocol, a fifth generation (5G) protocol, a New Radio (NR) protocol, and the like.

In this embodiment, the UEs 301 and 302 may further directly exchange communication data via a ProSe interface 305. The ProSe interface 305 may alternatively be referred to as a sidelink interface comprising one or more logical channels, including but not limited to a Physical Sidelink Control Channel (PSCCH), a Physical Sidelink Shared Channel (PSSCH), a Physical Sidelink Discovery Channel (PSDCH), and a Physical Sidelink Broadcast Channel (PSBCH).

The UE 302 is shown to be configured to access an access point (AP) 306 via connection 307. The connection 307 can comprise a local wireless connection, such as a connection consistent with any IEEE 802.11 protocol, wherein the AP 306 would comprise a wireless fidelity (WiFi®) router. In this example, the AP 306 is shown to be connected to the Internet without connecting to the core network of the wireless system (described in further detail below).

The RAN 310 can include one or more access nodes that enable the connections 303 and 304. These access nodes (ANs) can be referred to as base stations (BSs), NodeBs, evolved NodeBs (eNBs), next Generation NodeBs (gNB), RAN nodes, and so forth, and can comprise ground stations (e.g., terrestrial access points) or satellite stations providing coverage within a geographic area (e.g., a cell). The RAN 310 may include one or more RAN nodes for providing macrocells, e.g., macro RAN node 311, and one or more RAN nodes for providing femtocells or picocells (e.g., cells having smaller coverage areas, smaller user capacity, or higher bandwidth compared to macrocells), e.g., low power (LP) RAN node 312.

Any of the RAN nodes 311 and 312 can terminate the air interface protocol and can be the first point of contact for the UEs 301 and 302. In some embodiments, any of the RAN nodes 311 and 312 can fulfil various logical functions for the RAN 310 including, but not limited to, radio network controller (RNC) functions such as radio bearer management, uplink and downlink dynamic radio resource management and data packet scheduling, and mobility management.

In accordance with some embodiments, the UEs 301 and 302 can be configured to communicate using Orthogonal Frequency-Division Multiplexing (OFDM) communication signals with each other or with any of the RAN nodes 311 and 312 over a multicarrier communication channel in accordance various communication techniques, such as, but not limited to, an Orthogonal Frequency-Division Multiple Access (OFDMA) communication technique (e.g., for downlink communications) or a Single Carrier Frequency Division Multiple Access (SC-FDMA) communication technique (e.g., for uplink and ProSe or sidelink communications), although the scope of the embodiments is not limited in this respect. The OFDM signals can comprise a plurality of orthogonal subcarriers.

In some embodiments, a downlink resource grid can be used for downlink transmissions from any of the RAN nodes 311 and 312 to the UEs 301 and 302, while uplink transmissions can utilize similar techniques. The grid can be a time-frequency grid, called a resource grid or time-frequency resource grid, which is the physical resource in the downlink in each slot. Such a time-frequency plane representation is a common practice for OFDM systems, which makes it intuitive for radio resource allocation. Each column and each row of the resource grid corresponds to one OFDM symbol and one OFDM subcarrier, respectively. The duration of the resource grid in the time domain corresponds to one slot in a radio frame. The smallest time-frequency unit in a resource grid is denoted as a resource element. Each resource grid comprises a number of resource blocks, which describe the mapping of certain physical channels to resource elements. Each resource block comprises a collection of resource elements; in the frequency domain, this may represent the smallest quantity of resources that currently can be allocated. There are several different physical downlink channels that are conveyed using such resource blocks.

The physical downlink shared channel (PDSCH) may carry user data and higher-layer signalling to the UEs 301 and 302. The physical downlink control channel (PDCCH) may carry information about the transport format and resource allocations related to the PDSCH channel, among other things. It may also inform the UEs 301 and 302 about the transport format, resource allocation, and H-ARQ (Hybrid Automatic Repeat Request) information related to the uplink shared channel. Typically, downlink scheduling (assigning control and shared channel resource blocks to the UE 302 within a cell) may be performed at any of the RAN nodes 311 and 312 based on channel quality information fed back from any of the UEs 301 and 302. The downlink resource assignment information may be sent on the PDCCH used for (e.g., assigned to) each of the UEs 301 and 302.

The PDCCH may use control channel elements (CCEs) to convey the control information. Before being mapped to resource elements, the PDCCH complex-valued symbols may first be organized into quadruplets, which may then be permuted using a sub-block interleaver for rate matching. Each PDCCH may be transmitted using one or more of these CCEs, where each CCE may correspond to nine sets of four physical resource elements known as resource element groups (REGs). Four Quadrature Phase Shift Keying (QPSK) symbols may be mapped to each REG. The PDCCH can be transmitted using one or more CCEs, depending on the size of the downlink control information (DCI) and the channel condition. There can be four or more different PDCCH formats defined in LTE with different numbers of CCEs (e.g., aggregation level, L=1, 2, 4, or 8).

Some embodiments may use concepts for resource allocation for control channel information that are an extension of the above-described concepts. For example, some embodiments may utilize an enhanced physical downlink control channel (EPDCCH) that uses PDSCH resources for control information transmission. The EPDCCH may be transmitted using one or more enhanced the control channel elements (ECCEs). Similar to above, each ECCE may correspond to nine sets of four physical resource elements known as an enhanced resource element groups (EREGs). An ECCE may have other numbers of EREGs in some situations.

The RAN 310 is shown to be communicatively coupled to a core network (CN) 320 -via an S1 interface 313. In embodiments, the CN 320 may be an evolved packet core (EPC) network, a NextGen Packet Core (NPC) network, or some other type of CN. In this embodiment the S1 interface 313 is split into two parts: the S1-U interface 314, which carries traffic data between the RAN nodes 311 and 312 and the serving gateway (S-GW) 322, and the SI-mobility management entity (MME) interface 315, which is a signalling interface between the RAN nodes 311 and 312 and MMEs 321.

In this embodiment, the CN 320 comprises the MMEs 321, the S-GW 322, the Packet Data Network (PDN) Gateway (P-GW) 323, and a home subscriber server (HSS) 324. The MMEs 321 may be similar in function to the control plane of legacy Serving General Packet Radio Service (GPRS) Support Nodes (SGSN). The MMEs 321 may manage mobility aspects in access such as gateway selection and tracking area list management. The HSS 324 may comprise a database for network users, including subscription-related information to support the network entities' handling of communication sessions. The CN 320 may comprise one or several HSSs 324, depending on the number of mobile subscribers, on the capacity of the equipment, on the organization of the network, etc. For example, the HSS 324 can provide support for routing/roaming, authentication, authorization, naming/addressing resolution, location dependencies, etc.

The S-GW 322 may terminate the S1 interface 313 towards the RAN 310, and route data packets between the RAN 310 and the CN 320. In addition, the S-GW 322 may be a local mobility anchor point for inter-RAN node handovers and also may provide an anchor for inter-3GPP mobility. Other responsibilities may include lawful intercept, charging, and some policy enforcement.

The P-GW 323 may terminate an SGi interface toward a PDN. The P-GW 323 may route data packets between the EPC network 323 and external networks such as a network including the application server 330 (alternatively referred to as application function (AF)) via an Internet Protocol (IP) interface 325. Generally, the application server 330 may be an element offering applications that use IP bearer resources with the core network (e.g., UMTS Packet Services (PS) domain, LTE PS data services, etc.). In this embodiment, the P-GW 323 is shown to be communicatively coupled to an application server 330 via an IP communications interface 325. The application server 330 can also be configured to support one or more communication services (e.g., Voice-over-Internet Protocol (VoIP) sessions, PTT sessions, group communication sessions, social networking services, etc.) for the UEs 301 and 302 via the CN 320.

The P-GW 323 may further be a node for policy enforcement and charging data collection. Policy and Charging Enforcement Function (PCRF) 326 is the policy and charging control element of the CN 320. In a non-roaming scenario, there may be a single PCRF in the Home Public Land Mobile Network (HPLMN) associated with a UE's Internet Protocol Connectivity Access Network (IP-CAN) session. In a roaming scenario with local breakout of traffic, there may be two PCRFs associated with a UE's IP-CAN session: a Home PCRF (H-PCRF) within a HPLMN and a Visited PCRF (V-PCRF) within a Visited Public Land Mobile Network (VPLMN). The PCRF 326 may be communicatively coupled to the application server 330 via the P-GW 323. The application server 330 may signal the PCRF 326 to indicate a new service flow and select the appropriate Quality of Service (QoS) and charging parameters. The PCRF 326 may provision this rule into a Policy and Charging Enforcement Function (PCEF) (not shown) with the appropriate traffic flow template (TFT) and QoS class of identifier (QCI), which commences the QoS and charging as specified by the application server 330.

Fig. 4 illustrates an architecture of a system 400 of a network in accordance with some embodiments. The system 400 is shown to include a UE 401, which may be the same or similar to UEs 401 and 402 discussed previously; a RAN node 411, which may be the same or similar to RAN nodes 411 and 412 discussed previously; a User Plane Function (UPF) 402; a Data network (DN) 403, which may be, for example, operator services, Internet access or 3rd party services; and a 5G Core Network (5GC or CN) 420.

The CN 420 may include an Authentication Server Function (AUSF) 422; a Core Access and Mobility Management Function (AMF) 421; a Session Management Function (SMF) 424; a Network Exposure Function (NEF) 423; a Policy Control function (PCF) 426; a Network Function (NF) Repository Function (NRF) 425; a Unified Data Management (UDM) 427; and an Application Function (AF) 428. The CN 420 may also include other elements that are not shown, such as a Structured Data Storage network function (SDSF), an Unstructured Data Storage network function (UDSF), and the like.

The UPF 402 may act as an anchor point for intra-RAT and inter-RAT mobility, an external PDU session point of interconnect to DN 403, and a branching point to support multi-homed PDU session. The UPF 402 may also perform packet routing and forwarding, packet inspection, enforce user plane part of policy rules, lawfully intercept packets (UP collection); traffic usage reporting, perform QoS handling for user plane (e.g. packet filtering, gating, UL/DL rate enforcement), perform Uplink Traffic verification (e.g., SDF to QoS flow mapping), transport level packet marking in the uplink and downlink, and downlink packet buffering and downlink data notification triggering. UPF 402 may include an uplink classifier to support routing traffic flows to a data network. The DN 403 may represent various network operator services, Internet access, or third party services. DN 403 may include, or be similar to application server 330 discussed previously.

The AUSF 422 may store data for authentication of UE 401 and handle authentication related functionality. The AUSF 422 may facilitate a common authentication framework for various access types.

The AMF 421 may be responsible for registration management (e.g., for registering UE 401, etc.), connection management, reachability management, mobility management, and lawful interception of AMF-related events, and access authentication and authorization. AMF 421 may provide transport for SM messages between and SMF 424, and act as a transparent proxy for routing SM messages. AMF 421 may also provide transport for short message service (SMS) messages between UE 401 and an SMS function (SMSF) (not shown by Fig. 4). AMF 421 may act as Security Anchor Function (SEA), which may include interaction with the AUSF 422 and the UE 401, receipt of an intermediate key that was established as a result of the UE 401 authentication process. Where USIM based authentication is used, the AMF 421 may retrieve the security material from the AUSF 422. AMF 421 may also include a Security Context Management (SCM) function, which receives a key from the SEA that it uses to derive access-network specific keys. Furthermore, AMF 421 may be a termination point of RAN CP interface (N2 reference point), a termination point of NAS (N1) signalling, and perform NAS ciphering and integrity protection.

AMF 421 may also support NAS signalling with a UE 401 over an N3 interworking-function (IWF) interface. The N3IWF may be used to provide access to untrusted entities. N33IWF may be a termination point for the N2 and N3 interfaces for control plane and user plane, respectively, and as such, may handle N2 signalling from SMF and AMF for PDU sessions and QoS, encapsulate/de-encapsulate packets for IPSec and N3 tunnelling, mark N3 user-plane packets in the uplink, and enforce QoS corresponding to N3 packet marking taking into account QoS requirements associated to such marking received over N2. N3IWF may also relay uplink and downlink control-plane NAS (N1) signalling between the UE 401 and AMF 421, and relay uplink and downlink user-plane packets between the UE 401 and UPF 402. The N3IWF also provides mechanisms for IPsec tunnel establishment with the UE 401. The herein described methods and apparatuses for handling TNL associations may be used together with the AMF 421 of Fig. 4, or its equivalent, over any suitable interface, for example the N2 and N3 interfaces but also any other present, or future, functionality equivalent interfaces.

The SMF 424 may be responsible for session management (e.g., session establishment, modify and release, including tunnel maintain between UPF and AN node); UE IP address allocation & management (including optional Authorization); Selection and control of UP function; Configures traffic steering at UPF to route traffic to proper destination; termination of interfaces towards Policy control functions; control part of policy enforcement and QoS; lawful intercept (for SM events and interface to LI System); termination of SM parts of NAS messages; downlink Data Notification; initiator of AN specific SM information, sent via AMF over N2 to AN; determine SSC mode of a session. The SMF 424 may include the following roaming functionality: handle local enforcement to apply QoS SLAs (VPLMN); charging data collection and charging interface (VPLMN); lawful intercept (in VPLMN for SM events and interface to LI System); support for interaction with external DN for transport of signalling for PDU session authorization/authentication by external DN.

The NEF 423 may provide means for securely exposing the services and capabilities provided by 3GPP network functions for third party, internal exposure/re-exposure, Application Functions (e.g., AF 428), edge computing or fog computing systems, etc. In such embodiments, the NEF 423 may authenticate, authorize, and/or throttle the AFs. NEF 423 may also translate information exchanged with the AF 428and information exchanged with internal network functions. For example, the NEF 423 may translate between an AF-Service-Identifier and an internal 5GC information. NEF 423 may also receive information from other network functions (NFs) based on exposed capabilities of other network functions. This information may be stored at the NEF 423 as structured data, or at a data storage NF using a standardized interfaces. The stored information can then be re-exposed by the NEF 423 to other NFs and AFs, and/or used for other purposes such as analytics.

The NRF 425 may support service discovery functions, receive NF Discovery Requests from NF instances, and provide the information of the discovered NF instances to the NF instances. NRF 425 also maintains information of available NF instances and their supported services.

The PCF 426 may provide policy rules to control plane function(s) to enforce them, and may also support unified policy framework to govern network behaviour. The PCF 426 may also implement a front end (FE) to access subscription information relevant for policy decisions in a UDR of UDM 427.

The UDM 427 may handle subscription-related information to support the network entities' handling of communication sessions, and may store subscription data of UE 401. The UDM 427 may include two parts, an application FE and a User Data Repository (UDR). The UDM may include a UDM FE, which is in charge of processing of credentials, location management, subscription management and so on. Several different front ends may serve the same user in different transactions. The UDM-FE accesses subscription information stored in the UDR and performs authentication credential processing; user identification handling; access authorization; registration/mobility management; and subscription management. The UDR may interact with PCF 426. UDM 427 may also support SMS management, wherein an SMS-FE implements the similar application logic as discussed previously.

The AF 428 may provide application influence on traffic routing, access to the Network Capability Exposure (NCE), and interact with the policy framework for policy control. The NCE may be a mechanism that allows the 5GC and AF 428 to provide information to each other via NEF 423, which may be used for edge computing implementations. In such implementations, the network operator and third party services may be hosted close to the UE 401 access point of attachment to achieve an efficient service delivery through the reduced end-to-end latency and load on the transport network. For edge computing implementations, the 5GC may select a UPF 402 close to the UE 401 and execute traffic steering from the UPF 402 to DN 403 via the N6 interface. This may be based on the UE subscription data, UE location, and information provided by the AF 428. In this way, the AF 428 may influence UPF (re)selection and traffic routing. Based on operator deployment, when AF 428 is considered to be a trusted entity, the network operator may permit AF 428 to interact directly with relevant NFs.

As discussed previously, the CN 420 may include an SMSF, which may be responsible for SMS subscription checking and verification, and relaying SM messages to/from the UE 401 to/from other entities, such as an SMS-GMSC/IWMSC/SMS-router. The SMS may also interact with AMF 421 and 4M XR27 for notification procedure that the UE 401 is available for SMS transfer (e.g., set a UE not reachable flag, and notifying UDM 427 when UE 401 is available for SMS).

The system 400 may include the following service-based interfaces: Namf: Service-based interface exhibited by AMF; Nsmf: Service-based interface exhibited by SMF; Nnef: Service-based interface exhibited by NEF; Npcf: Service-based interface exhibited by PCF; Nudm: Service-based interface exhibited by UDM; Naf: Service-based interface exhibited by AF; Nnrf: Service-based interface exhibited by NRF; and Nausf: Service-based interface exhibited by AUSF.

The system 400 may include the following reference points: N1: Reference point between the UE and the AMF; N2: Reference point between the (R)AN and the AMF; N3: Reference point between the (R)AN and the UPF; N4: Reference point between the SMF and the UPF; and N6: Reference point between the UPF and a Data Network. There may be many more reference points and/or service-based interfaces between the NF services in the NFs, however, these interfaces and reference points have been omitted for clarity. For example, an N5 reference point may be between the PCF and the AF; an N7 reference point may be between the PCF and the SMF; an N11 reference point between the AMF and SMF; etc. In some embodiments, the CN 420 may include an Nx interface, which is an inter-CN interface between the MME (e.g., MME 321) and the AMF 421 in order to enable interworking between CN 420 and CN 420.

Although not shown by Fig. 4, system 400 may include multiple RAN nodes 411 wherein an Xn interface is defined between two or more RAN nodes 411 (e.g., gNBs and the like) that connecting to 5GC 420, between a RAN node 411 (e.g., gNB) connecting to 5GC 420 and an eNB (e.g., a RAN node 311 of Fig. 3), and/or between two eNBs connecting to 5GC 420.

In some implementations, the Xn interface may include an Xn user plane (Xn-U) interface and an Xn control plane (Xn-C) interface. The Xn-U may provide non-guaranteed delivery of user plane PDUs and support/provide data forwarding and flow control functionality. The Xn-C may provide management and error handling functionality, functionality to manage the Xn-C interface; mobility support for UE 401 in a connected mode (e.g., CM-CONNECTED) including functionality to manage the UE mobility for connected mode between one or more RAN nodes 411. The mobility support may include context transfer from an old (source) serving RAN node 411 to new (target) serving RAN node 411; and control of user plane tunnels between old (source) serving RAN node 411 to new (target) serving RAN node 411.

A protocol stack of the Xn-U may include a transport network layer built on Internet Protocol (IP) transport layer, and a GTP-U layer on top of a UDP and/or IP layer(s) to carry user plane PDUs. The Xn-C protocol stack may include an application layer signalling protocol (referred to as Xn Application Protocol (Xn-AP)) and a transport network layer that is built on an SCTP layer. The SCTP layer may be on top of an IP layer. The SCTP layer provides the guaranteed delivery of application layer messages. In the transport IP layer point-to-point transmission is used to deliver the signalling PDUs. In other implementations, the Xn-U protocol stack and/or the Xn-C protocol stack may be same or similar to the user plane and/or control plane protocol stack(s) shown and described herein.

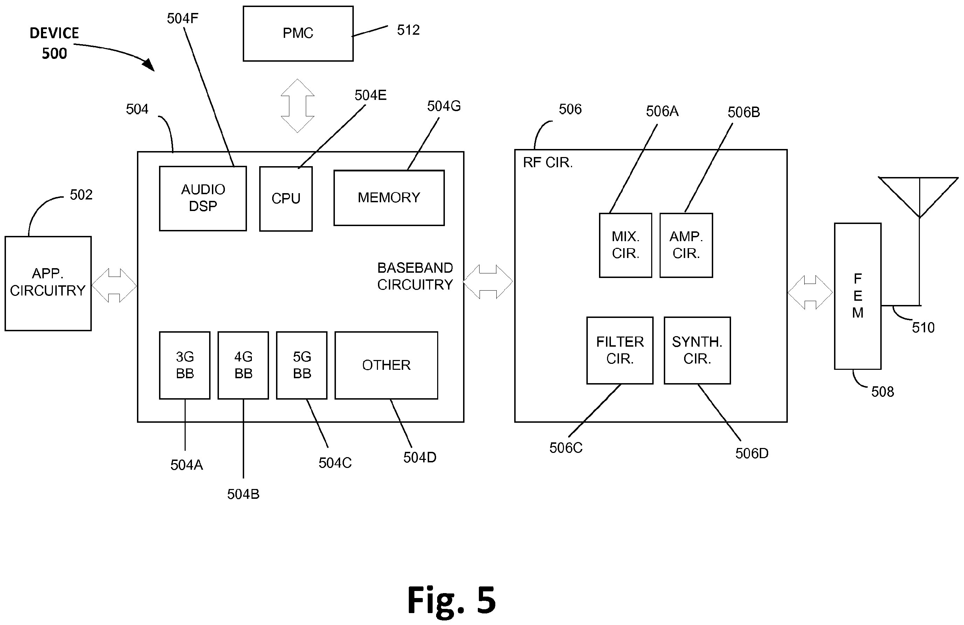

Fig. 5 illustrates example components of a device 500 in accordance with some embodiments. In some embodiments, the device 500 may include application circuitry 502, baseband circuitry 504, Radio Frequency (RF) circuitry 506, front-end module (FEM) circuitry 508, one or more antennas 510, and power management circuitry (PMC) 512 coupled together at least as shown. The components of the illustrated device 500 may be included in a UE or a RAN node. In some embodiments, the device 500 may include less elements (e.g., a RAN node may not utilize application circuitry 502, and instead include a processor/controller to process IP data received from an EPC). In some embodiments, the device 500 may include additional elements such as, for example, memory/storage, display, camera, sensor, or input/ output)I/O(interface. In other embodiments, the components described below may be included in more than one device (e.g., said circuitries may be separately included in more than one device for Cloud-RAN (C-RAN) implementations).

The application circuitry 502 may include one or more application processors. For example, the application circuitry 502 may include circuitry such as, but not limited to, one or more single- core or multi-core processors. The processor)s(may include any combination of general-purpose processors and dedicated processors) e.g., graphics processors, application processors, etc.). The processors may be coupled with or may include memory/storage and may be configured to execute instructions stored in the memory/storage to enable various applications or operating systems to run on the device 500. In some embodiments, processors of application circuitry 502 may process IP data packets received from an EPC.

The baseband circuitry504 may include circuitry such as, but not limited to, one or more single-core or multi-core processors. The baseband circuitry 504 may include one or more baseband processors or control logic to process baseband signals received from a receive signal path of the RF circuitry 506 and to generate baseband signals for a transmit signal path of the RF circuitry 506. Baseband processing circuity 504 may interface with the application circuitry 502 for generation and processing of the baseband signals and for controlling operations of the RF circuitry 506. For example, in some embodiments, the baseband circuitry 504 may include a third generation (3G) baseband processor 504A, a fourth generation (4G) baseband processor 504B, a fifth generation (5G) baseband processor 504C, or other baseband processor(s) 504D for other existing generations, generations in development or to be developed in the future (e.g., second generation (2G), sixth generation (6G), etc.). The baseband circuitry 504 (e.g., one or more of baseband processors 504A-D) may handle various radio control functions that enable communication with one or more radio networks via the RF circuitry 506. In other embodiments, some or all of the functionality of baseband processors 504A-D may be included in modules stored in the memory 504G and executed via a Central Processing Unit (CPU) 504E. The radio control functions may include, but are not limited to, signal modulation/demodulation, encoding/decoding, radio frequency shifting, etc. In some embodiments, modulation/demodulation circuitry of the baseband circuitry 504 may include Fast-Fourier Transform (FFT), precoding, or constellation mapping/demapping functionality. In some embodiments, encoding/decoding circuitry of the baseband circuitry 504 may include convolution, tail-biting convolution, turbo, Viterbi, or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry 504 may include one or more audio digital signal processor(s) (DSP) 504F. The audio DSP(s) 504F may be include elements for compression/decompression and echo cancellation and may include other suitable processing elements in other embodiments. Components of the baseband circuitry may be suitably combined in a single chip, a single chipset, or disposed on a same circuit board in some embodiments. In some embodiments, some or all of the constituent components of the baseband circuitry504 and the application circuitry 502 may be implemented together such as, for example, on a system on a chip)SOC(.

In some embodiments, the baseband circuitry 504 may provide for communication compatible with one or more radio technologies. For example, in some embodiments, the baseband circuitry504 may support communication with an evolved universal terrestrial radio access network)EUTRAN(or other wireless metropolitan area networks)WMAN(,a wireless local area network)WLAN(,a wireless personal area network (WPAN). Embodiments in which the baseband circuitry504 is configured to support radio communications of more than one wireless protocol may be referred to as multi- mode baseband circuitry.

RF circuitry 506 may enable communication with wireless networks using modulated electromagnetic radiation through a non-solid medium. In various embodiments, the RF circuitry506 may include switches, filters, amplifiers, etc. to facilitate the communication with the wireless network. RF circuitry 506 may include a receive signal path which may include circuitry to down-convert RF signals received from the FEM circuitry 508 and provide baseband signals to the baseband circuitry 504. RF circuitry 506 may also include a transmit signal path which may include circuitry to up-convert baseband signals provided by the baseband circuitry 504 and provide RF output signals to the FEM circuitry 508 for transmission.

In some embodiments, the receive signal path of the RF circuitry 506 may include mixer circuitry 506a, amplifier circuitry 506b and filter circuitry 506c. In some embodiments, the transmit signal path of the RF circuitry 506 may include filter circuitry 506c and mixer circuitry 506a. RF circuitry 506 may also include synthesizer circuitry 506d for synthesizing a frequency for use by the mixer circuitry 506a of the receive signal path and the transmit signal path. In some embodiments, the mixer circuitry 506a of the receive signal path may be configured to down-convert RF signals received from the FEM circuitry 508 based on the synthesized frequency provided by synthesizer circuitry 506d. The amplifier circuitry 506b may be configured to amplify the down-converted signals and the filter circuitry 506c may be a low-pass filter (LPF) or band-pass filter (BPF) configured to remove unwanted signals from the down-converted signals to generate output baseband signals. Output baseband signals may be provided to the baseband circuitry 504 for further processing. In some embodiments, the output baseband signals may be zero-frequency baseband signals, although this is not a requirement. In some embodiments, mixer circuitry 506a of the receive signal path may comprise passive mixers, although the scope of the embodiments is not limited in this respect.

In some embodiments, the mixer circuitry 506a of the transmit signal path may be configured to up-convert input baseband signals based on the synthesized frequency provided by the synthesizer circuitry 506d to generate RF output signals for the FEM circuitry 508. The baseband signals may be provided by the baseband circuitry 504 and may be filtered by filter circuitry 506c.

In some embodiments, the mixer circuitry 506a of the receive signal path and the mixer circuitry 506a of the transmit signal path may include two or more mixers and may be arranged for quadrature downconversion and upconversion, respectively. In some embodiments, the mixer circuitry 506a of the receive signal path and the mixer circuitry 506a of the transmit signal path may include two or more mixers and may be arranged for image rejection (e.g., Hartley image rejection). In some embodiments, the mixer circuitry 506a of the receive signal path and the mixer circuitry 506a may be arranged for direct downconversion and direct upconversion, respectively. In some embodiments, the mixer circuitry 506a of the receive signal path and the mixer circuitry 506a of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 506 may include analog-to-digital converter (ADC) and digital-to-analog converter (DAC) circuitry and the baseband circuitry 504 may include a digital baseband interface to communicate with the RF circuitry 506.

In some dual-mode embodiments, a separate radio IC circuitry may be provided for processing signals for each spectrum, although the scope of the embodiments is not limited in this respect.

In some embodiments, the synthesizer circuitry 506d may be a fractional-N synthesizer or a fractional N/N+1 synthesizer, although the scope of the embodiments is not limited in this respect as other types of frequency synthesizers may be suitable. For example, synthesizer circuitry 506d may be a delta-sigma synthesizer, a frequency multiplier, or a synthesizer comprising a phase-locked loop with a frequency divider.

The synthesizer circuitry 506d may be configured to synthesize an output frequency for use by the mixer circuitry 506a of the RF circuitry 506 based on a frequency input and a divider control input. In some embodiments, the synthesizer circuitry 506d may be a fractional N/N+1 synthesizer.

In some embodiments, frequency input may be provided by a voltage controlled oscillator (VCO), although that is not a requirement. Divider control input may be provided by either the baseband circuitry 504 or the applications processor 502 depending on the desired output frequency. In some embodiments, a divider control input (e.g., N) may be determined from a look-up table based on a channel indicated by the applications processor 502.

Synthesizer circuitry 506d of the RF circuitry 506 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry 506d may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency (fLO). In some embodiments, the RF circuitry 506 may include an IQ/polar converter.

FEM circuitry 508 may include a receive signal path which may include circuitry configured to operate on RF signals received from one or more antennas 510, amplify the received signals and provide the amplified versions of the received signals to the RF circuitry 506 for further processing. FEM circuitry 508 may also include a transmit signal path which may include circuitry configured to amplify signals for transmission provided by the RF circuitry 506 for transmission by one or more of the one or more antennas 510. In various embodiments, the amplification through the transmit or receive signal paths may be done solely in the RF circuitry 506, solely in the FEM 508, or in both the RF circuitry 506 and the FEM 508.

In some embodiments, the FEM circuitry 508 may include a TX/RX switch to switch between transmit mode and receive mode operation. The FEM circuitry may include a receive signal path and a transmit signal path. The receive signal path of the FEM circuitry may include an LNA to amplify received RF signals and provide the amplified received RF signals as an output (e.g., to the RF circuitry 506). The transmit signal path of the FEM circuitry 508 may include a power amplifier (PA) to amplify input RF signals (e.g., provided by RF circuitry 506), and one or more filters to generate RF signals for subsequent transmission (e.g., by one or more of the one or more antennas 510).

In some embodiments, the PMC 512 may manage power provided to the baseband circuitry 504. In particular, the PMC 512 may control power-source selection, voltage scaling, battery charging, or DC-to-DC conversion. The PMC 512 may often be included when the device 500 is capable of being powered by a battery, for example, when the device is included in a UE. The PMC 512 may increase the power conversion efficiency while providing desirable implementation size and heat dissipation characteristics.

While Fig. 5 shows the PMC 512 coupled only with the baseband circuitry 504. However, in other embodiments, the PMC 512 may be additionally or alternatively coupled with, and perform similar power management operations for, other components such as, but not limited to, application circuitry 502, RF circuitry 506, or FEM 508.

In some embodiments, the PMC 512 may control, or otherwise be part of, various power saving mechanisms of the device 500. For example, if the device 500 is in an RRC_Connected state, where it is still connected to the RAN node as it expects to receive traffic shortly, then it may enter a state known as Discontinuous Reception Mode (DRX) after a period of inactivity. During this state, the device 500 may power down for brief intervals of time and thus save power.

If there is no data traffic activity for an extended period of time, then the device 500 may transition off to an RRC_Idle state, where it disconnects from the network and does not perform operations such as channel quality feedback, handover, etc. The device 500 goes into a very low power state and it performs paging where again it periodically wakes up to listen to the network and then powers down again. The device 500 may not receive data in this state, in order to receive data, it must transition back to RRC_Connected state.

An additional power saving mode may allow a device to be unavailable to the network for periods longer than a paging interval (ranging from seconds to a few hours). During this time, the device is totally unreachable to the network and may power down completely. Any data sent during this time incurs a large delay and it is assumed the delay is acceptable.

Processors of the application circuitry 502 and processors of the baseband circuitry 504 may be used to execute elements of one or more instances of a protocol stack. For example, processors of the baseband circuitry 504, alone or in combination, may be used execute Layer 3, Layer 2, or Layer 1 functionality, while processors of the application circuitry 504 may utilize data (e.g., packet data) received from these layers and further execute Layer 4 functionality (e.g., transmission communication protocol (TCP) and user datagram protocol (UDP) layers). As referred to herein, Layer 3 may comprise a radio resource control (RRC) layer, described in further detail below. As referred to herein, Layer 2 may comprise a medium access control (MAC) layer, a radio link control (RLC) layer, and a packet data convergence protocol (PDCP) layer, described in further detail below. As referred to herein, Layer 1 may comprise a physical (PHY) layer of a UE/RAN node, described in further detail below.

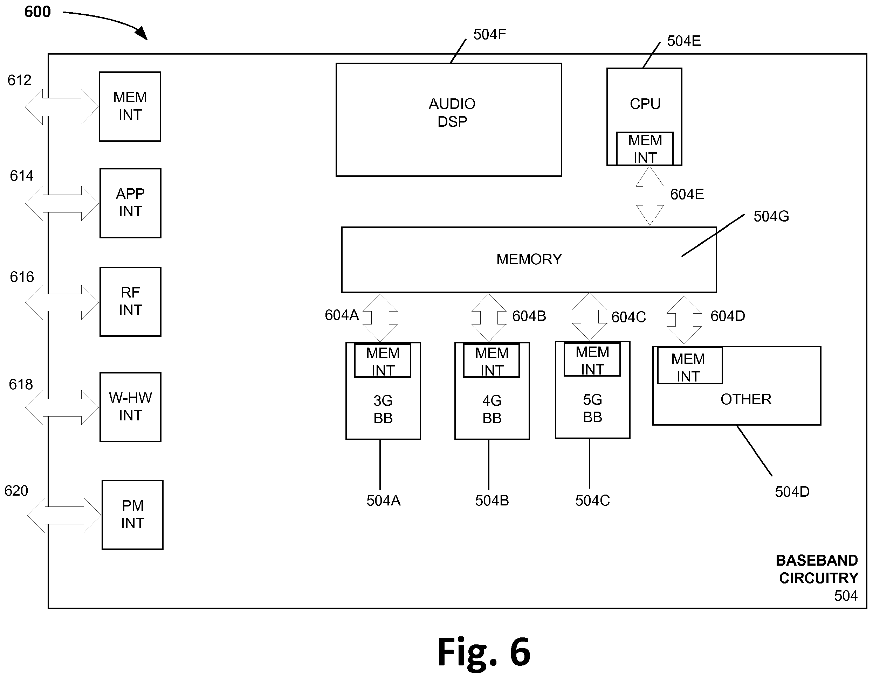

Fig. 6 illustrates example interfaces of baseband circuitry in accordance with some embodiments. As discussed above, the baseband circuitry 504 of Fig. 5 may comprise processors 504A-504E and a memory 504G utilized by said processors. Each of the processors 504A-504E may include a memory interface, 604A-604E, respectively, to send/receive data to/from the memory 504G.

The baseband circuitry 504 may further include one or more interfaces to communicatively couple to other circuitries/devices, such as a memory interface 612 (e.g., an interface to send/receive data to/from memory external to the baseband circuitry 504), an application circuitry interface 614 (e.g., an interface to send/receive data to/from the application circuitry 502 of Fig. 5), an RF circuitry interface 616 (e.g., an interface to send/receive data to/from RF circuitry 506 of Fig. 5), a wireless hardware connectivity interface 618 (e.g., an interface to send/receive data to/from Near Field Communication (NFC) components, Bluetooth® components (e.g., Bluetooth® Low Energy), Wi-Fi® components, and other communication components), and a power management interface 620 (e.g., an interface to send/receive power or control signals to/from the PMC 512.

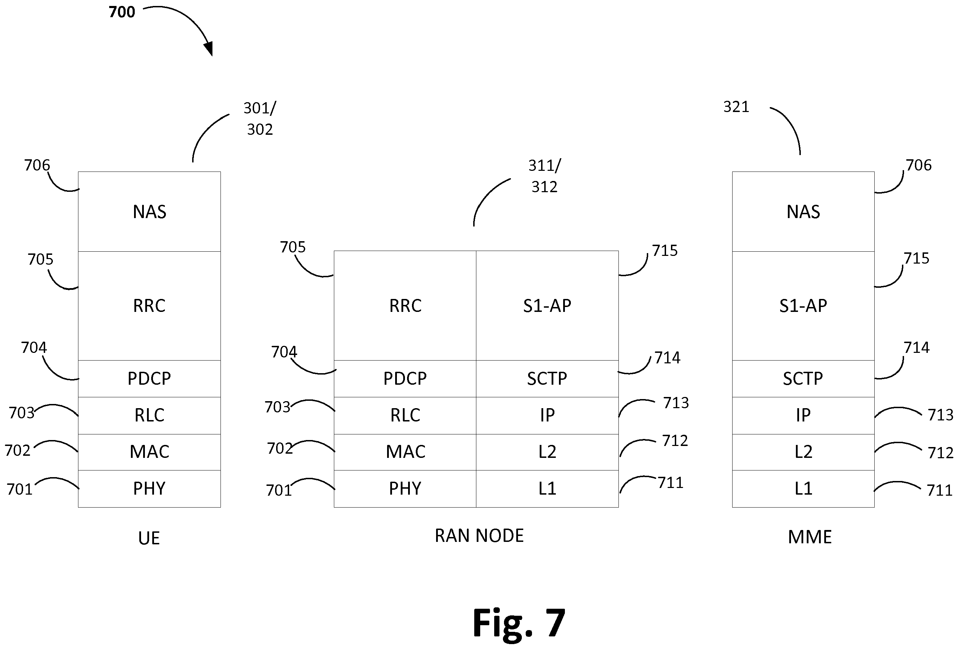

Fig. 7 is an illustration of a control plane protocol stack in accordance with some embodiments. In this embodiment, a control plane 700 is shown as a communications protocol stack between the UE 301 (or alternatively, the UE 302), the RAN node 311 (or alternatively, the RAN node 312), and the MME 321.

The PHY layer 701 may transmit or receive information used by the MAC layer 702 over one or more air interfaces. The PHY layer 701 may further perform link adaptation or adaptive modulation and coding (AMC), power control, cell search (e.g., for initial synchronization and handover purposes), and other measurements used by higher layers, such as the RRC layer 705. The PHY layer 701 may still further perform error detection on the transport channels, forward error correction (FEC) coding/decoding of the transport channels, modulation/demodulation of physical channels, interleaving, rate matching, mapping onto physical channels, and Multiple Input Multiple Output (MIMO) antenna processing.

The MAC layer 702 may perform mapping between logical channels and transport channels, multiplexing of MAC service data units (SDUs) from one or more logical channels onto transport blocks (TB) to be delivered to PHY via transport channels, de-multiplexing MAC SDUs to one or more logical channels from transport blocks (TB) delivered from the PHY via transport channels, multiplexing MAC SDUs onto TBs, scheduling information reporting, error correction through hybrid automatic repeat request (HARQ), and logical channel prioritization.

The RLC layer 703 may operate in a plurality of modes of operation, including: Transparent Mode (TM), Unacknowledged Mode (UM), and Acknowledged Mode (AM). The RLC layer 703 may execute transfer of upper layer protocol data units (PDUs), error correction through automatic repeat request (ARQ) for AM data transfers, and concatenation, segmentation and reassembly of RLC SDUs for UM and AM data transfers. The RLC layer 703 may also execute re-segmentation of RLC data PDUs for AM data transfers, reorder RLC data PDUs for UM and AM data transfers, detect duplicate data for UM and AM data transfers, discard RLC SDUs for UM and AM data transfers, detect protocol errors for AM data transfers, and perform RLC re-establishment.

The PDCP layer 704 may execute header compression and decompression of IP data, maintain PDCP Sequence Numbers (SNs), perform in-sequence delivery of upper layer PDUs at re-establishment of lower layers, eliminate duplicates of lower layer SDUs at re-establishment of lower layers for radio bearers mapped on RLC AM, cipher and decipher control plane data, perform integrity protection and integrity verification of control plane data, control timer-based discard of data, and perform security operations (e.g., ciphering, deciphering, integrity protection, integrity verification, etc.).

The main services and functions of the RRC layer 705 may include broadcast of system information (e.g., included in Master Information Blocks (MIBs) or System Information Blocks (SIBs) related to the non-access stratum (NAS)), broadcast of system information related to the access stratum (AS), paging, establishment, maintenance and release of an RRC connection between the UE and E-UTRAN (e.g., RRC connection paging, RRC connection establishment, RRC connection modification, and RRC connection release), establishment, configuration, maintenance and release of point to point Radio Bearers, security functions including key management, inter radio access technology (RAT) mobility, and measurement configuration for UE measurement reporting. Said MIBs and SIBs may comprise one or more information elements (IEs), which may each comprise individual data fields or data structures.

The UE 301 and the RAN node 311 may utilize a Uu interface (e.g., an LTE-Uu interface) to exchange control plane data via a protocol stack comprising the PHY layer 701, the MAC layer 702, the RLC layer 703, the PDCP layer 704, and the RRC layer 705.

The non-access stratum (NAS) protocols 706 form the highest stratum of the control plane between the UE 301 and the MME 321. The NAS protocols 706 support the mobility of the UE 301 and the session management procedures to establish and maintain IP connectivity between the UE 301 and the P-GW 323.

The S1 Application Protocol (S1-AP) layer 715 may support the functions of the S1 interface and comprise Elementary Procedures (EPs). An EP is a unit of interaction between the RAN node 311 and the CN 320. The S1-AP layer services may comprise two groups: UE-associated services and non UE-associated services. These services perform functions including, but not limited to: E-UTRAN Radio Access Bearer (E-RAB) management, UE capability indication, mobility, NAS signalling transport, RAN Information Management (RIM), and configuration transfer.

The Stream Control Transmission Protocol (SCTP) layer (alternatively referred to as the SCTP/IP layer) 714 may ensure reliable delivery of signalling messages between the RAN node 311 and the MME 321 based, in part, on the IP protocol, supported by the IP layer 713. The L2 layer 712 and the L1 layer 711 may refer to communication links (e.g., wired or wireless) used by the RAN node and the MME to exchange information.

The RAN node 311 and the MME 321 may utilize an S1-MME interface to exchange control plane data via a protocol stack comprising the L1 layer 711, the L2 layer 712, the IP layer 713, the SCTP layer 714, and the S1-AP layer 715.

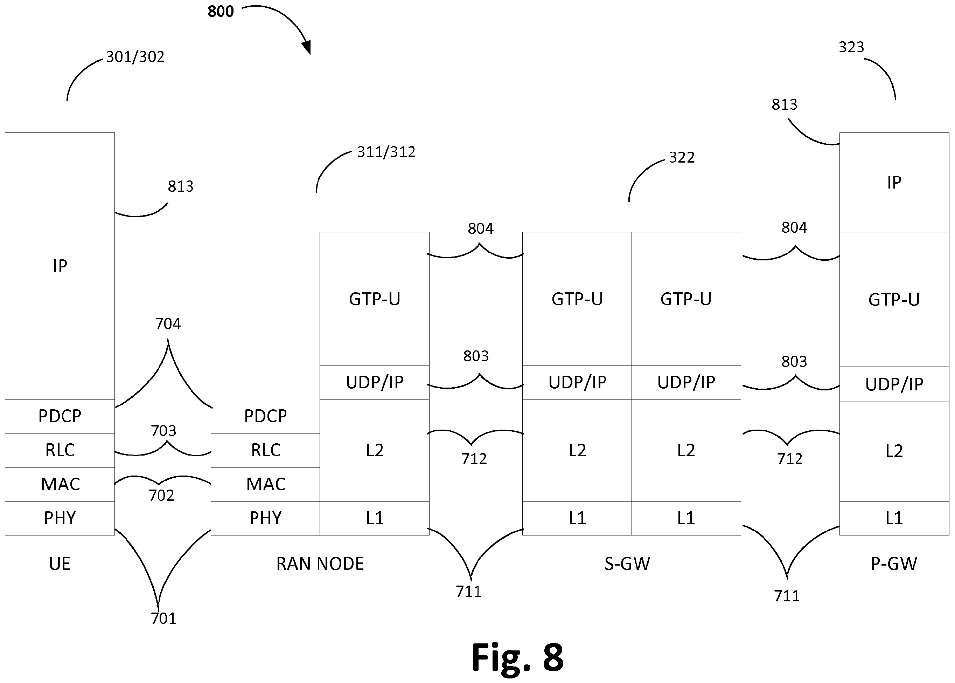

Fig. 8 is an illustration of a user plane protocol stack in accordance with some embodiments. In this embodiment, a user plane 800 is shown as a communications protocol stack between the UE 301 (or alternatively, the UE 302), the RAN node 311 (or alternatively, the RAN node 312), the S-GW 322, and the P-GW 323. The user plane 800 may utilize at least some of the same protocol layers as the control plane 700. For example, the UE 301 and the RAN node 311 may utilize a Uu interface (e.g., an LTE-Uu interface) to exchange user plane data via a protocol stack comprising the PHY layer 701, the MAC layer 702, the RLC layer 703, the PDCP layer 704.

The General Packet Radio Service (GPRS) Tunneling Protocol for the user plane (GTP-U) layer 804 may be used for carrying user data within the GPRS core network and between the radio access network and the core network. The user data transported can be packets in any of IPv4, IPv6, or PPP formats, for example. The UDP and IP security (UDP/IP) layer 803 may provide checksums for data integrity, port numbers for addressing different functions at the source and destination, and encryption and authentication on the selected data flows. The RAN node 311 and the S-GW 322 may utilize an S1-U interface to exchange user plane data via a protocol stack comprising the L1 layer 711, the L2 layer 712, the UDP/IP layer 803, and the GTP-U layer 804. The S-GW 322 and the P-GW 323 may utilize an S5/S8a interface to exchange user plane data via a protocol stack comprising the L1 layer 711, the L2 layer 712, the UDP/IP layer 803, and the GTP-U layer 804. As discussed above with respect to Fig. 7, NAS protocols support the mobility of the UE 301 and the session management procedures to establish and maintain IP connectivity between the UE 301 and the P-GW 323.

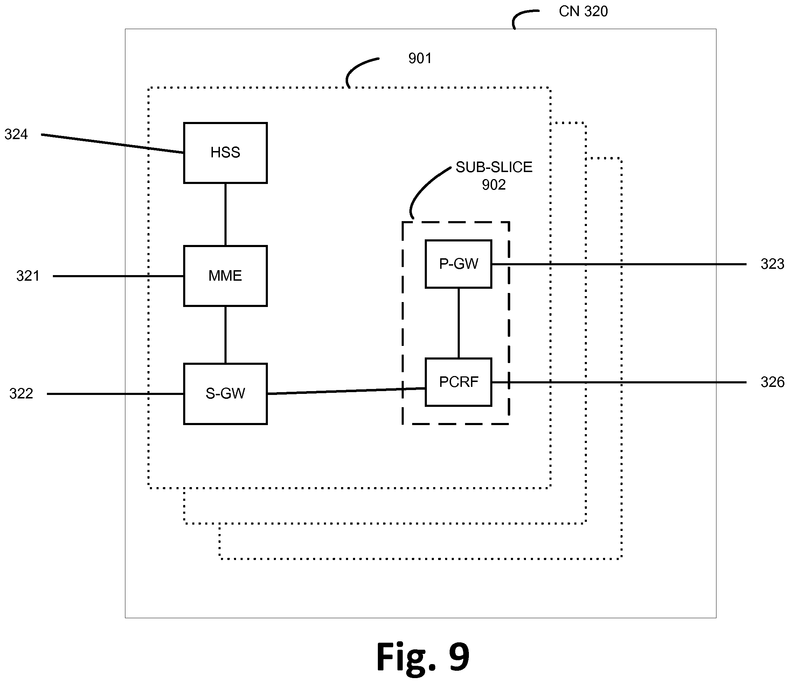

Fig. 9 illustrates components of a core network in accordance with some embodiments. The components of the CN 320 may be implemented in one physical node or separate physical nodes including components to read and execute instructions from a machine-readable or computer-readable medium (e.g., a non-transitory machine-readable storage medium). In embodiments, the components of CN XR20 may be implemented in a same or similar manner as discussed herein with regard to the components of CN 320. In some embodiments, Network Functions Virtualization (NFV) is utilized to virtualize any or all of the above described network node functions via executable instructions stored in one or more computer readable storage mediums (described in further detail below). A logical instantiation of the CN 320 may be referred to as a network slice 901. A logical instantiation of a portion of the CN 320 may be referred to as a network sub-slice 902 (e.g., the network sub-slice 902 is shown to include the PGW 323 and the PCRF 326).

NFV architectures and infrastructures may be used to virtualize one or more network functions, alternatively performed by proprietary hardware, onto physical resources comprising a combination of industry-standard server hardware, storage hardware, or switches. In other words, NFV systems can be used to execute virtual or reconfigurable implementations of one or more EPC components/functions.

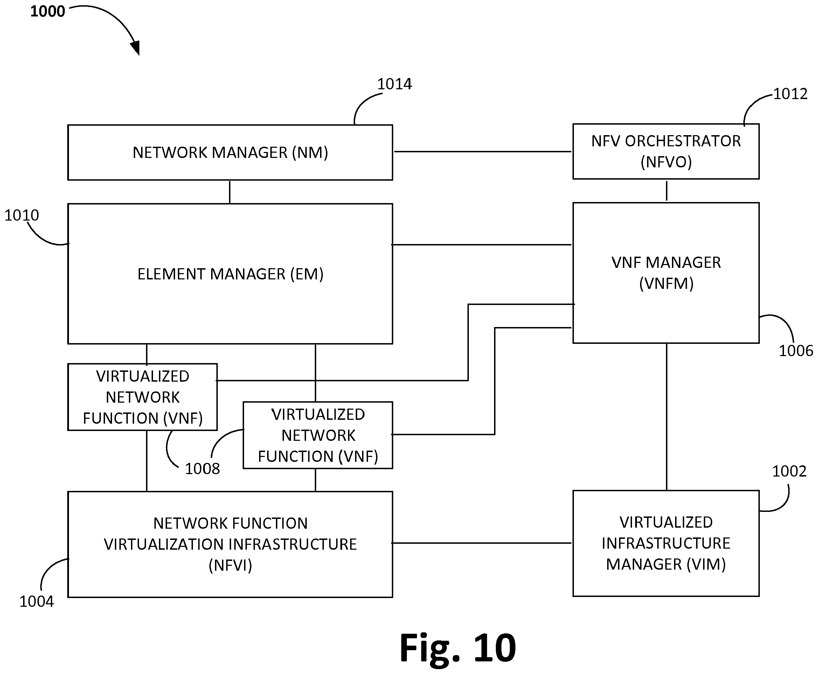

Fig. 10 is a block diagram illustrating components, according to some example embodiments, of a system 1000 to support NFV. The system 1000 is illustrated as including a virtualized infrastructure manager (VIM) 1002, a network function virtualization infrastructure (NFVI) 1004, a VNF manager (VNFM) 1006, virtualized network functions (VNFs) 1008, an element manager (EM) 1010, an NFV Orchestrator (NFVO) 1012, and a network manager (NM) 1014.

The VIM 1002 manages the resources of the NFVI 1004. The NFVI 1004 can include physical or virtual resources and applications (including hypervisors) used to execute the system 1000. The VIM 1002 may manage the life cycle of virtual resources with the NFVI 1004 (e.g., creation, maintenance, and tear down of virtual machines (VMs) associated with one or more physical resources), track VM instances, track performance, fault and security of VM instances and associated physical resources, and expose VM instances and associated physical resources to other management systems.

The VNFM 1006 may manage the VNFs 1008. The VNFs 1008 may be used to execute EPC components/functions. The VNFM 1006 may manage the life cycle of the VNFs 1008 and track performance, fault and security of the virtual aspects of VNFs 1008. The EM 1010 may track the performance, fault and security of the functional aspects of VNFs 1008. The tracking data from the VNFM 1006 and the EM 1010 may comprise, for example, performance measurement (PM) data used by the VIM 1002 or the NFVI 1004. Both the VNFM 1006 and the EM 1010 can scale up/down the quantity of VNFs of the system 1000.

The NFVO 1012 may coordinate, authorize, release and engage resources of the NFVI 1004 in order to provide the requested service (e.g., to execute an EPC function, component, or slice). The NM 1014 may provide a package of end-user functions with the responsibility for the management of a network, which may include network elements with VNFs, non-virtualized network functions, or both (management of the VNFs may occur via the EM 1010).

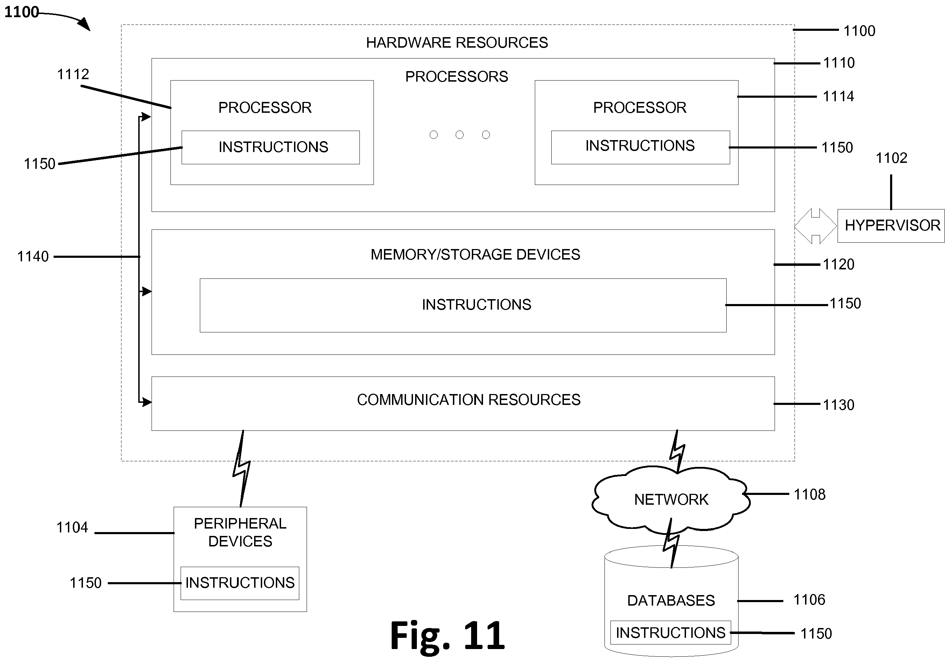

Fig. 11 is a block diagram illustrating components, according to some example embodiments, able to read instructions from a machine-readable or computer-readable medium (e.g., a non-transitory machine-readable storage medium) and perform any one or more of the methodologies discussed herein. Specifically, Fig. 11 shows a diagrammatic representation of hardware resources 1100 including one or more processors (or processor cores) 1110, one or more memory/storage devices 1120, and one or more communication resources 1130, each of which may be communicatively coupled via a bus 1140. For embodiments where node virtualization (e.g., NFV) is utilized, a hypervisor 1102 may be executed to provide an execution environment for one or more network slices/sub-slices to utilize the hardware resources 1100

The processors 1110 (e.g., a central processing unit (CPU), a reduced instruction set computing (RISC) processor, a complex instruction set computing (CISC) processor, a graphics processing unit (GPU), a digital signal processor (DSP) such as a baseband processor, an application specific integrated circuit (ASIC), a radio-frequency integrated circuit (RFIC), another processor, or any suitable combination thereof) may include, for example, a processor 1112 and a processor 1114.

The memory/storage devices 1120 may include main memory, disk storage, or any suitable combination thereof. The memory/storage devices 1120 may include, but are not limited to any type of volatile or non-volatile memory such as dynamic random access memory (DRAM), static random-access memory (SRAM), erasable programmable read-only memory (EPROM), electrically erasable programmable read-only memory (EEPROM), Flash memory, solid-state storage, etc.

The communication resources 1130 may include interconnection or network interface components or other suitable devices to communicate with one or more peripheral devices 1104 or one or more databases 1106 via a network 1108. For example, the communication resources 1130 may include wired communication components (e.g., for coupling via a Universal Serial Bus (USB)), cellular communication components, NFC components, Bluetooth® components (e.g., Bluetooth® Low Energy), Wi-Fi® components, and other communication components.

Instructions 1150 may comprise software, a program, an application, an applet, an app, or other executable code for causing at least any of the processors 1110 to perform any one or more of the methodologies discussed herein. The instructions 1150 may reside, completely or partially, within at least one of the processors 1110 (e.g., within the processor's cache memory), the memory/storage devices 1120, or any suitable combination thereof. Furthermore, any portion of the instructions 1150 may be transferred to the hardware resources 1100 from any combination of the peripheral devices 1104 or the databases 1106. Accordingly, the memory of processors 1110, the memory/storage devices 1120, the peripheral devices 1104, and the databases 1106 are examples of computer-readable and machine-readable media.

In some embodiments, the electronic device(s), network(s), system(s), chip(s) or component(s), or portions or implementations thereof, of any figure herein may be configured to perform one or more processes, techniques, or methods as described herein, or portions thereof.
Example 1 may include a Radio Access Node (e.g. a gNodeB) configured to receive two lists of Transport Network Layer addresses from the Access and Mobility Management Function, wherein one list to be used for initial User Equipment messages and the other list to be used for other messages.
Example 2 may include the Radio Access Node (e.g. gNodeB) of example 1 and/or some other examples herein, wherein the Radio Access Node (gNodeB) is further configured to receive said Transport Network Layer address lists in *NG Setup Response Message.*
Example 3 may include the Radio Access Network (e.g. gNodeB) of example 2 and/or some other examples herein, wherein the Radio Access Network (gNodeB) is further configured to receive said Transport Network Layer address lists in *AMF Configuration Update* message.
Example 4 may include a Radio Access Network (e.g. gNodeB) configured to indicate to the Access and Mobility Management Function which Transport Network Layer association is used for non-User Equipment-associated signalling.
Example 5 may include the Radio Access Network (e.g. gNodeB) of example 4 and/or some other examples herein, wherein the gNB is further configured to send said indication in *RAN Configuration Update* message
Example 6 may provide a method in an Access and Mobility Management Function for configuring Transport Network Layer address associations in a gNodeB, the method comprising: sending a message comprising one or more lists of Transport Network Layer address associations, wherein the one or more lists comprises: one or more Transport Network Layer address associations to be used for initial User Equipment messages.
In Example 7, which may include Example 6, or any other example herein, the one or more lists further comprises: one or more Transport Network Layer address associations to be used for subsequent User Equipment related signalling.
In Example 8, which may include Example 6, or any other example herein, the Access and Mobility Management Function is deployed in a virtualized environment.
In Example 9, which may include any of Examples 6 to 8, the message is an Access and Mobility Management Function Configuration Update message.
In Example 10, which may include any of Examples 6 to 8, wherein the message is a NG Setup Response message.
In Example 11, which may include any of Examples 6 to 10, the one or more lists comprises a single list, the single list comprising both the one or more Transport Network Layer address associations to be used for initial User Equipment messages and the one or more Transport Network Layer address associations to be used for subsequent User Equipment related signalling.
In Example 12, which may include any of Examples 6 to 10, the one or more lists comprises: a first list, comprising one or more Transport Network Layer address associations to be added to the gNodeB configuration; a second list, comprising one or more Transport Network Layer address associations to be removed from the gNodeB configuration; and a third list, comprising one or more Transport Network Layer address associations to be updated in the gNodeB configuration.
In Example 13, which may include any of Examples 11 to 12, each of the one or more lists further comprises a first field corresponding to each of the one or more Transport Network Layer address associations, the first field indicating whether the corresponding Transport Network Layer address association is to be used for initial User Equipment messages or is to be used for subsequent User Equipment associated signalling.
In Example 14, which may include any of Examples 6 to 10, the one or more lists comprises: a first list, comprising one or more Transport Network Layer address associations to be used for initial User Equipment messages; and a second list, comprising one or more Transport Network Layer address associations to be used for subsequent User Equipment related signalling.
In Example 15, which may include any of Examples 6 to 10, the one or more lists comprises: a first list, comprising one or more Transport Network Layer address associations to be used for initial User Equipment messages to be added to the gNodeB configuration; a second list, comprising one or more Transport Network Layer address associations to be used for initial User Equipment messages to be removed from the gNodeB configuration; a third list, comprising one or more Transport Network Layer address associations to be used for subsequent User Equipment associated signalling to be added to the gNodeB configuration; and a fourth list, comprising one or more Transport Network Layer address associations to be used for subsequent User Equipment associated signalling to be removed from the gNodeB configuration.
In Example 16, which may include any of Examples 6 to 15, the message further comprises a second field corresponding to each of the one or more Transport Network Layer address associations, the second field indicating whether the corresponding Transport Network Layer address association is to be used for User Equipment-associated signalling, for non-User Equipment-associated signalling, or both.
In Example 17, which may include any of Examples 6 to 16, the method comprises: receiving, at the Access and Mobility Management Function, an initial User Equipment message from the gNodeB on a selected Transport Network Layer from the one or more Transport Network Layer address associations to be used for initial User Equipment messages; and sending, to the gNodeB, a response on a Transport Network Layer that is not the selected Transport Network Layer.
Example 18 may provide a method in a gNodeB for configuring Transport Network Layer address associations in the gNodeB, the method comprising: receiving a message comprising one or more lists of Transport Network Layer address associations, wherein the one or more lists comprises: one or more Transport Network Layer address associations to be used for initial User Equipment messages.
In Example 19, which may include any of Example 18, the one or more lists further comprises one or more Transport Network Layer address associations to be used for subsequent User Equipment related signalling.
In Example 20, which may include any of Examples 18 to 19, the message is an Access and Mobility Management Function Configuration Update message.
In Example 21, which may include any of Examples 18 to 19, the message is a NG Setup Response message.
In Example 22, which may include any of Examples 18 to 24, the one or more lists comprises a single list, the single list comprising both the one or more Transport Network Layer address associations to be used for initial User Equipment messages and the one or more Transport Network Layer address associations to be used for subsequent User Equipment related signalling.
In Example 23, which may include any of Examples 18 to 24, the one or more lists comprises: a first list, comprising one or more Transport Network Layer address associations to be added to the gNodeB configuration; a second list, comprising one or more Transport Network Layer address associations to be removed from the gNodeB configuration; and a third list, comprising one or more Transport Network Layer address associations to be updated in the gNodeB configuration.
In Example 24, which may include any of Examples 22 to 23, each of the one or more lists further comprises a first field corresponding to each of the one or more Transport Network Layer address associations, the first field indicating whether the corresponding Transport Network Layer address association is to be used for initial User Equipment messages or is to be used for subsequent User Equipment associated signalling.
In Example 25, which may include any of Examples 18 to 21, the one or more lists comprises: a first list, comprising one or more Transport Network Layer address associations to be used for initial User Equipment messages; and a second list, comprising one or more Transport Network Layer address associations to be used for subsequent User Equipment related signalling.
In Example 26, which may include any of Examples 18 to 21, the one or more lists comprises: a first list, comprising one or more Transport Network Layer address associations to be used for initial User Equipment messages to be added to the gNodeB configuration; a second list, comprising one or more Transport Network Layer address associations to be used for initial User Equipment messages to be removed from the gNodeB configuration; a third list, comprising one or more Transport Network Layer address associations to be used for subsequent User Equipment associated signalling to be added to the gNodeB configuration; and a fourth list, comprising one or more Transport Network Layer address associations to be used for subsequent User Equipment associated signalling to be removed from the gNodeB configuration.
In Example 27, which may include any of Examples 18 to 26, the method further comprises: selecting a Transport Network Layer on which to send an initial User Equipment message from the one or more Transport Network Layer address associations available for sending initial User Equipment messages.
In Example 28, which may include any of Example 27, the method further comprises: sending, to the Access and Mobility Management Function, the initial User Equipment message on the selected Transport Network Layer.
In Example 29, which may include any of Example 27, the method further comprises: receiving, from the Access and Mobility Management Function, a response on a second Transport Network Layer that is not the selected Transport Network Layer; and sending all subsequent messages to the Access and Mobility Management Function using the second Transport Network Layer.
Example 30 may provide an apparatus in a gNodeB for configuring Transport Network Layer address associations in the gNodeB, the apparatus configured to: receive a message from an Access and Mobility Management Function, the received message comprising one or more lists of Transport Network Layer address associations, wherein the one or more lists comprises one or more Transport Network Layer address associations to be used for initial User Equipment messages.
In Example 31, which may include Example 30, the apparatus comprises one or more lists further comprises one or more Transport Network Layer address associations to be used for subsequent User Equipment related signalling.
In Example 32, which may include Examples 30 to 31, the received message is an Access and Mobility Management Function Configuration Update message.
In Example 33, which may include Examples 30 to 31, the message is a NG Setup Response message.
In Example 34, which may include Examples 30 to 33, the apparatus is further configured to: select a Transport Network Layer association on which to send an initial User Equipment message from the one or more Transport Network Layer address associations to be used for initial User Equipment messages.
In Example 35, which may include Example 34, the apparatus is further configured to: send, to the Access and Mobility Management Function, the initial User Equipment message, using the selected Transport Network Layer association.
In Example 36, which may include Example 35, the apparatus is further configured to: receive, from the Access and Mobility Management Function, a response on a second Transport Network Layer that is not the selected Transport Network Layer; and send all subsequent messages to the Access and Mobility Management Function using the second Transport Network Layer.
Example 37 may provide an apparatus in an Access and Mobility Management Function for configuring Transport Network Layer address associations in a gNodeB, the apparatus configured to: send a message to the gNodeB, the sent message comprising one or more lists of Transport Network Layer address associations, wherein the one or more lists comprises one or more Transport Network Layer address associations to be used for initial User Equipment messages.
In Example 38, which may include Example 37, the one or more lists further comprises one or more Transport Network Layer address associations to be used for subsequent User Equipment related signalling.
In Example 39, which may include Example 37, the Access and Mobility Management Function is deployed in a virtualized environment.
In Example 40, which may include Examples 37 to 39, the received message is an Access and Mobility Management Function Configuration Update message.
In Example 41, which may include Examples 37 to 39, the message is a NG Setup Response message.
In Example 42, which may include Examples 37 to 41, the apparatus is further configured to: receive, at the Access and Mobility Management Function, an initial User Equipment message from the gNodeB on a selected Transport Network Layer from the one or more Transport Network Layer address associations to be used for initial User Equipment messages; and send, to the gNodeB, a response on a Transport Network Layer that is not the selected Transport Network Layer.
Example 43 may provide a method for configuring Transport Network Layer address associations in an Access and Mobility Management Function, the method comprising: sending on a first Transport Network Layer, a message from a gNodeB indicating one or more Transport Network Layer address associations of a plurality of Transport Network Layer addresses to be used for non-User Equipment associated signalling.
In Example 44, which may include Example 43, the message is a Radio Access Network Configuration Update message.
In Example 45, which may include Examples 43 to 44, the first Transport Network Layer is designated to be used for initial User Equipment messages.
In Example 46, which may include Examples 43 to 45, one of the one or more Transport Network Layer addresses to be used for non-User Equipment associated signalling is a preconfigured Transport Network Layer address of the Access and Mobility Management Function.
In Example 47, which may include Examples 43 to 46, the Access and Mobility Management Function does not remove the one or more Transport Network Layer address associations that are used for non-User Equipment associated signalling.
In Example 48, which may include Examples 43 to 47, the one or more Transport Network Layer address associations to be used for non-User Equipment associated signalling can also be used for initial User Equipment messages.
Example 49 may provide a method of configuring Transport Network Layer address associations in an Access and Mobility Management Function, the method comprising: receiving on a first Transport Network Layer, at the Access and Mobility Management Function, a message from a gNodeB indicating one or more Transport Network Layer address associations of a plurality of Transport network Layer addresses to be used for non-User Equipment associated signalling.
In Example 50, which may include Example 49, the message is a Radio Access Network Configuration Update message.
In Example 51, which may include Examples 49 to 50, one of the one or more Transport Network Layer addresses to be used for non-User Equipment related signalling is a preconfigured Transport Network Layer address of the Access and Mobility Management Function.
In Example 52, which may include Examples 49 to 51, the Access and Mobility Management Function does not remove the one or more Transport Network Layer address associations that are used for non-User Equipment associated signalling.
In Example 53, which may include Examples 49 to 52, the one or more Transport Network Layer address associations to be used for non-User Equipment associated signalling can also be used for initial User Equipment messages.
Example 54 may provide an apparatus in a gNodeB for configuring Transport Network Layer address associations in an Access and Mobility Management Function, the apparatus configured to: send, on a first Transport Network Layer, a message to the Access and Mobility Management Function, the sent message indicating one or more Transport Network Layer address associations of a plurality of Transport Network Layer addresses to be used for non-User Equipment associated signalling.
In Example 55, which may include Example 54, the sent message is a Radio Access Network Configuration Update Message.
In Example 56, which may include Examples 54 to 55, the first Transport Network Layer is designated to be used for initial User Equipment messages.
In Example 57, which may include Examples 54 to 56, one of the one or more Transport Network Layer addresses to be used for non-User Equipment associated signalling is a preconfigured Transport Network Layer address of the Access and Mobility Management Function.
In Example 58, which may include Examples 54 to 57, the apparatus is further configured to: send an initial User Equipment message to the Access and Mobility Management Function using the one or more Transport Network Layer address associations to be used for non-User Equipment associated signalling.
Example 59 may provide an apparatus in an Access and Mobility Management Function for configuring Transport Network Layer address associations in the Access and Mobility Management Function, the apparatus configured to: receive, on a first Transport Network Layer, a message from the gNodeB, the received message indicating one or more Transport Network Layer address associations of a plurality of Transport Network Layer addresses to be used for non-User Equipment associated signalling.
In Example 60, which may include Example 59, the message is a Radio Access Network Configuration Update message.
In Example 61, which may include Examples 59 to 60, one of the one or more Transport Network Layer addresses to be used for non-User Equipment related signalling is a preconfigured Transport Network Layer address of the Access and Mobility Management Function.
In Example 62, which may include Examples 59 to 61, the apparatus is further configured to: not remove the one or more Transport Network Layer address associations that are used for non-User Equipment associated signalling.
In Example 63, which may include Examples 59 to 62, the one or more Transport Network Layer address associations to be used for non-User Equipment associated signalling can also be used for initial User Equipment messages.
Example 64 may include an apparatus comprising means to perform one or more elements of a method described in or related to any of examples 1-5, or any other method or process described herein.
Example 65 may include one or more non-transitory computer-readable media comprising instructions to cause an electronic device, upon execution of the instructions by one or more processors of the electronic device, to perform one or more elements of a method described in or related to any of examples 1-5, or any other method or process described herein.
Example 66 may include an apparatus comprising logic, modules, or circuitry to perform one or more elements of a method described in or related to any of examples 1-5, or any other method or process described herein.
Example 67 may include a method, technique, or process as described in or related to any of examples 1-5, or portions or parts thereof.
Example 68 may include an apparatus comprising: one or more processors and one or more computer readable media comprising instructions that, when executed by the one or more processors, cause the one or more processors to perform the method, techniques, or process as described in or related to any of examples 1-5, or portions thereof.
Example 69 may include a signal as described in or related to any of examples 1-5, or any other methods described herein or portions or parts thereof.
Example 70 may include a signal in a wireless network as shown and described herein.
Example 71 may include a method of communicating in a wireless network as shown and described herein.
Example 72 may include a system for providing wireless communication as shown and described herein.
Example 73 may include a device for providing wireless communication as shown and described herein.

The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

## Claims

1. An apparatus in a Radio Access Network for configuring Transport Network Layer address associations in an Access and Mobility Management Function, the apparatus configured to:
send, on a first Transport Network Layer, a message to the Access and Mobility Management Function, the sent message indicating one or more Transport Network Layer address associations of a plurality of Transport Network Layer addresses to be used for non-User Equipment associated signalling.

2. The apparatus of claim 1, wherein the sent message is a Radio Access Network Configuration Update Message.

3. The apparatus of claim 1 or 2, wherein the first Transport Network Layer is designated to be used for initial User Equipment messages.

4. The apparatus of any of claims 1 to 3, wherein one of the one or more Transport Network Layer addresses to be used for non-User Equipment associated signalling is a preconfigured Transport Network Layer address of the Access and Mobility Management Function.

5. The apparatus of any of claims 1 to 4, further configured to:
send an initial User Equipment message to the Access and Mobility Management Function using the one or more Transport Network Layer address associations to be used for non-User Equipment associated signalling.

6. A method in an Access and Mobility Management Function for configuring Transport Network Layer address associations in a Radio Access Network, the method comprising:
sending a message comprising one or more lists of Transport Network Layer address associations, wherein the one or more lists comprises:
one or more Transport Network Layer address associations to be used for initial User Equipment messages.

7. The method of claim 6, wherein the one or more lists further comprises:
one or more Transport Network Layer address associations to be used for subsequent User Equipment related signalling.

8. The method of claim 6 or 7, wherein the Access and Mobility Management Function is deployed in a virtualized environment.

9. The method of any of claims 6 to 8, wherein the message is an Access and Mobility Management Function Configuration Update message.

10. The method of any of claims 6 to 8, wherein the message is a NG Setup Response message.

11. The method of any of claims 6 to 10, wherein the one or more lists comprises a single list, the single list comprising both the one or more Transport Network Layer address associations to be used for initial User Equipment messages and the one or more Transport Network Layer address associations to be used for subsequent User Equipment related signalling.

12. The method of any of claims 6 to 10, wherein the one or more lists comprises:
a first list, comprising one or more Transport Network Layer address associations to be added to the Radio Access Network configuration;
a second list, comprising one or more Transport Network Layer address associations to be removed from the Radio Access Network configuration; and
a third list, comprising one or more Transport Network Layer address associations to be updated in the gNodeB configuration.

13. The method of claim 11 or 12, wherein each of the one or more lists further comprises a first field corresponding to each of the one or more Transport Network Layer address associations, the first field indicating whether the corresponding Transport Network Layer address association is to be used for initial User Equipment messages or is to be used for subsequent User Equipment associated signalling.

14. The method of any of claims 6 to 13, wherein the message further comprises a second field corresponding to each of the one or more Transport Network Layer address associations, the second field indicating whether the corresponding Transport Network Layer address association is to be used for User Equipment-associated signalling, for non-User Equipment-associated signalling, or both.

15. One or more non-transitory computer-readable media comprising instructions to cause an electronic device, upon execution of the instructions by one or more processors of the electronic device, to perform the method of any of claims 6 to 14.
